# EUROPEAN PATENT SPECIFICATION

(11) **EP 1 762 013 B1**
(45) Date of publication and mention of the grant of the patent: **11.08.2010**
(21) Application number: 06731827.9
(22) Date of filing: 07.04.2006
(51) Int. Cl.: H04B 3/54, H04L 27/26

(54) **Communication apparatus and communication method thereof**
Kommunikationsgerät und Kommunikationsverfahren dafür
Appareil de communication et méthode de communication associée

(30) Priority: 08.04.2005 JP 2005112319; 01.03.2006 JP 2006055202
(43) Date of publication of application: 14.03.2007
(73) Proprietor: Panasonic Corporation, Kadoma-shi Osaka 571-8501 (JP)
(72) Inventor: KOGA, Hisao c/o Matsushita Electric Industrial Co., Lt, Osaka-shi Osaka 540-6319 (JP); KODAMA, N. c/o Matsushita Electric Industrial Co., Lt, Osaka-shi Osaka 540-6319 (JP)
(74) Representative: Eisenführ, Speiser & Partner
(86) International application number: PCT/JP2006/307891
(87) International publication number: WO 2006/109868

(56) References cited:
- EP-A- 0 719 004
- EP-A- 1 357 718
- WO-A2-03/003611
- US-A1- 2004 037 311
- DENIS J G MESTDAGH ET AL: "A Method to Reduce the Probability of Clipping in DMT-Based Transceivers" IEEE TRANSACTIONS ON COMMUNICATIONS, IEEE SERVICE CENTER, PISCATAWAY, NJ, US, vol. 44, no. 10, October 1996 (1996-10), XP011008806 ISSN: 0090-6778 cited in the application

## Description

### Technical Field

The present invention relates to a communication apparatus a communication method thereof that are capable of data communications using a multicarrier communication method.

### Background Art

With the recent development of communication technology, PLC (Power Line Communication) has been gaining attention. PLC is a technology that performs multicarrier communications among a plurality of terminal apparatuses, using power lines installed indoors as transmission lines, and utilizes an OFDM (Orthogonal Frequency Division Multiplexing) system. OFDM is a method for multicarrier data transmission, by which a plurality of carriers are transmitted in a parallel and multiplex way on a frequency axis. OFDM uses an FFT (First Fourier Transform) or a DWT (Discrete Wavelet Transform) to narrow frequency intervals of multicarriers and to closely space a plurality of carriers in such a way that they partially overlap and yet do not interfere with one another. OFDM thus enables broadband transmission by efficiently using a narrow frequency spectrum.

For multicarrier communications, such as power line communications, a technology is proposed to suppress interference and the like by preventing occurrence of significant peak overlapping a plurality of time waveforms through equalization of time waveform levels. In this technology, when a time waveform has no significant peak, the phase of each subcarrier is rotated using a default phase vector. However, when the significant peak is detected, the phase vector is changed until a phase vector that generates no waveform peak is found, and the phase of each subcarrier is thus rotated according to the changed phase vector (Denis J. G. Mestdagh and Paul M. P. Spruyt, "A Method to Reduce the Probability of Clipping in DMT-Based Transceivers", IEEE Transactions on Communications, Vol.44, No.10, pp.1234-1238, 1996).

On the other hand, in an environment where different networks are closely located, the same phase vector is generally used for transmission/reception signals by a communication apparatus connected to each network, so that adverse influence caused by communication signals from other networks may be suppressed. Therefore, interference between signals may be suppressed, thus enabling communications between different networks.

When signals have the same phase vector as described above, interference between the signals may be suppressed even if the number of networks increases. This, however, reduces channel capacity divided between different networks, resulting in lower transmission efficiency.

In US 2004/037311 a method and system for providing low cost narrow band digital power line communication using OFDM-like protocols is disclosed to promote spectral diversity, reduce data loss, and provide higher data throughput. This invention provides a specific design to accommodate the requirements of a wide variety of communication applications and is adapted to make use of an AC power line communication within a building or facility without requiring dedicated hard wiring and does so with the advantages of OFDM but without the high costs of OFDM.

In EP 1 357 718 an OFDM (Orthogonal Frequency Division Multiplexing) communication system is disclosed which includes a transmitter for converting a serial data stream into parallel data. The parallel data is segmented into a plurality of blocks and reference data is inserted into each of the segmented blocks having information representing a phase value and a position into which the reference symbol is inserted. An IFFT (Inverse Fast Fourier Transform) transforms the respective blocks into time-based signals where sub-carrier frequencies are separately assigned to the data blocks. Phase factors of the time-based signals are determined to reduce a peak-to-average power ratio (PAPR) where nonlinear distortion occurs due to coincidence of phases of the data blocks The IFFT-transformed signals are phase-rotated according to the determined phase factors before transmission.

In EP 0 719 004 a complex multiplier complex-multiplies a carrier modulation signal group for deciding the phases and amplitudes of a plurality of carriers which are orthogonal to each other on the frequency axis by a complex signal group having a predetermined specific pattern which varies in phase at random. An inverse Fourier transformer performs inverse Fourier transformation on an output of the complex multiplier, for transforming a digital signal which is multiplexed on the frequency axis to an OFDM signal on the time axis. A guard interval insertion part adds front and rear guard intervals to front and rear parts of each symbol of the OFDM signal respectively. The front and rear guard intervals include data which are identical to those of rear and front end parts of the corresponding symbol respectively. Arithmetic processing which is reverse to that on a transmission side is performed on a receiving side, whereby distortion of received data is removed. Thus, the OFDM signal can be transmitted with no waveform distortion on a data component of each symbol on the frequency axis after Fourier transformation even if a reflected wave is superposed on a direct wave due to a multipath.

### Disclosure of the Invention

Some embodiments described hereinafter are provided to address the above-described problems. A purpose of these embodiments is to provide a communication apparatus and a communication method thereof that are capable of improving transmission efficiency by preventing interference between different networks during data communications using a multicarrier communication system.

This problem is solved by providing a communication apparatus, a communication method, and an integrated circuit as set forth in the claims.

Accordingly, interference between the different networks can be prevented by changing a phase vector for each of the different networks, and transmission efficiency is thus improved.

### Brief Description of Drawings

Fig. 1 is a schematic perspective view of a communication apparatus according to an embodiment;
Fig. 2 is a front view of the communication apparatus according to the embodiment;
Fig. 3 is a rear view of the communication apparatus according to the embodiment;
Fig. 4 is a hardware block diagram illustrating the communication apparatus according to the embodiment;
Fig. 5 is a block diagram illustrating a main part configuration of the communication apparatus according to the embodiment;
Fig. 6 is a block diagram illustrating a first configuration example of a phase vector modification unit and a multicarrier modulator of a transmitter according to the present embodiment;
Fig. 7 is a block diagram illustrating a first configuration example of a phase vector re-rotation unit and a multicarrier demodulator of a receiver according to the present embodiment;
Fig. 8 is a block diagram illustrating a second configuration example of the phase vector modification unit and the multicarrier modulator of the transmitter according to the present embodiment;
Fig. 9 is a block diagram illustrating a second configuration example of the phase vector re-rotation unit and the multicarrier demodulator of the receiver according to the present embodiment;
Fig. 10 is a hardware block diagram illustrating a second configuration example of the communication apparatus according to the present embodiment;
Fig. 11 shows a schematic configuration of a home communication system to which the communication apparatus according to the present embodiment is applied;
Fig. 12 shows an example (a second configuration) of an external configuration of the communication apparatus according to the present embodiment;
Fig. 13 shows an example (a third configuration) of an external configuration of the communication apparatus according to the present embodiment;
Fig. 14 shows a conceptual configuration that includes a plurality of networks to which the communication apparatuses according to the present embodiment are applied;
Fig. 15A is a flowchart illustrating a process for changing a phase vector by the communication apparatus according to the present embodiment;
Fig. 15B is a flowchart illustrating a process for detecting a communication signal by the communication apparatus according to the present embodiment;
Fig. 16 is a flowchart illustrating a process for registering an apparatus by the communication apparatus according to the present embodiment;
Fig. 17 is a flowchart illustrating another process for changing a phase vector by a base unit according to a second embodiment;
Fig. 18 is a flowchart illustrating another process for changing a phase vector by a remote unit according to the second embodiment; and
Fig. 19 is a flowchart illustrating another process for changing a phase vector by a base unit according to a third embodiment.

### Best Mode for Carrying Out the Invention

### (First Embodiment)

The embodiments are explained in the following with reference to the above-described drawings. As an example illustrating a communication apparatus capable of data communications among a plurality of networks, embodiments of a communication apparatus that performs multicarrier communications via a power line or other transmission lines are described in the following.

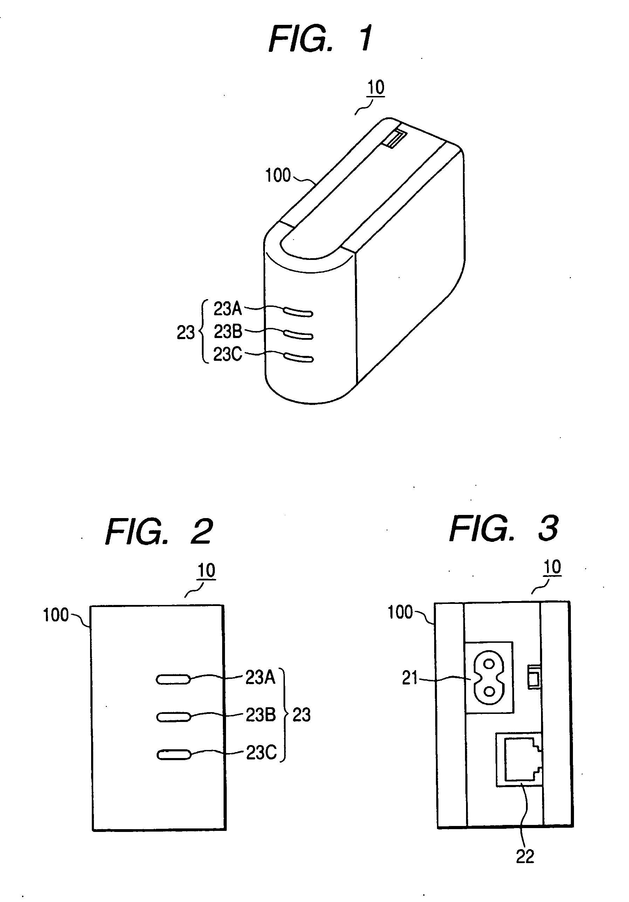

Communication apparatus 10 of the present embodiment is a modem as shown in Figs. 1 through 3. Communication apparatus 10 includes chassis 100. As shown in Figs. 1 and 2, display 23 is provided on the front of chassis 100. Display 23 includes a plurality of LEDs (Light Emitting Diodes) 23A, 23B and 23C. As shown in Fig. 3, power connector 21 and LAN (Local Area Network) modular jack 22, such as RJ 45, are provided on the rear of chassis 100. As shown in Fig. 2, a power line (not shown in the drawing) such as a VVF cable connects to power connector 21. A LAN cable (not shown in the drawing) connects to modular jack 22. The modem shown in Figs. 1 through 3 is illustrated as a mere example of the communication apparatus, and an electric appliance equipped with a modem (e.g., a home electric appliance such as a television set) may be used instead.

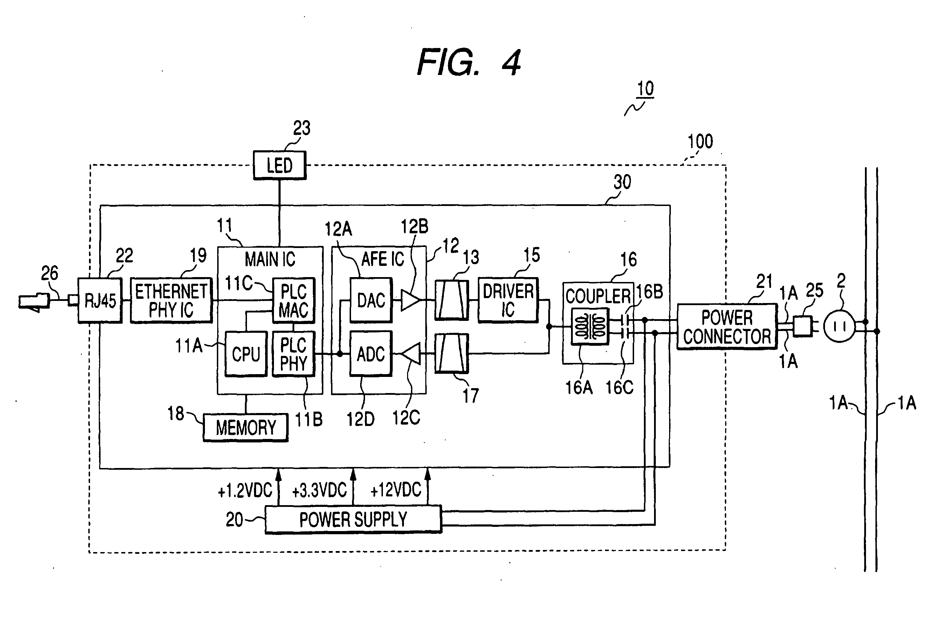

As shown in Fig. 4, communication apparatus 10 includes circuit module 30 and power supply 20 (e.g., a switched mode power supply). Power supply 20 supplies voltages of various levels (e.g., +1.2V, +3.3V, +12V, etc) to circuit module 30. Circuit module 30 includes main IC 11, AFE IC (Analog Front End IC) 12, band pass filter 13, driver IC 15, coupler 16, band pass filter 17, memory 18 and Ethernet PHY IC 19. Power connector 21 connects to power lines 1A via plug 25 and power outlet 2.

Main IC 11 includes CPU (Central Processing Unit) 11A, PLC MAC (Power Line Communication Media Access Control layer) block 11C and PLC PHY (Power Line Communication Physical layer) block 11B. CPU 11A is equipped with a 32-bit RISC (Reduced Instruction Set Computer) processor. PLC MAC block 11C controls MAC layers of transmission/reception signals, while PLC PHY block 11B controls PHY layers of transmission/reception signals. AFE IC 12 includes DA converter (DAC) 12A, AD converter (ADC) 12D, and amplifiers 12B and 12C. Coupler 16 includes coil transformer 16A, and coupling condensers 16B and 16C.

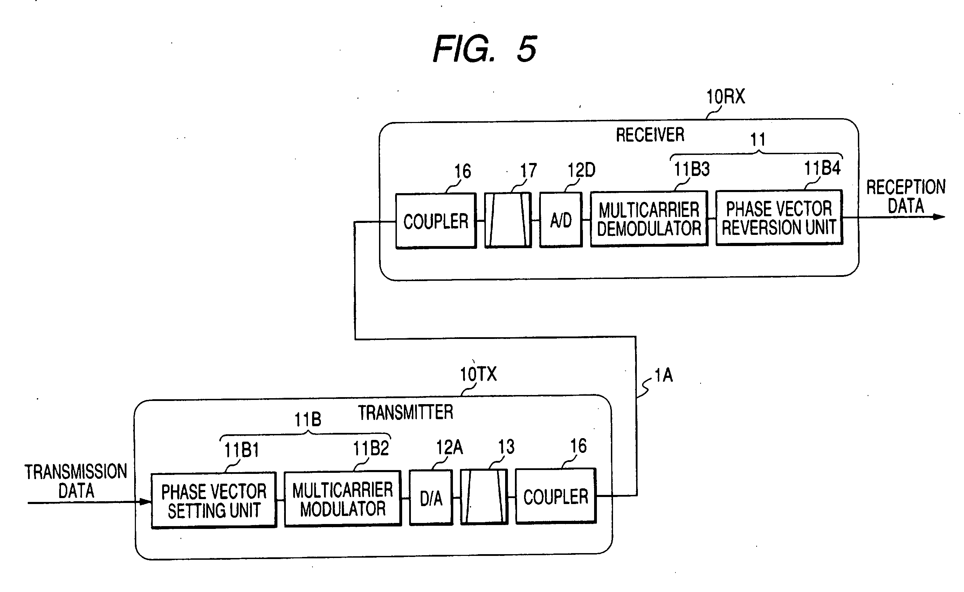

Although transmitter 10TX on the transmitting side and receiver 10RX on the receiving side are separately illustrated in Fig. 5, the communication apparatus generally has functions of both transmitter 10TX and receiver 10RX. The following illustrates PLC PHY block 11B of communication apparatus 10 with separate descriptions provided for transmitter 10TX and receiver 10RX. However, PLC PHY block 11B may have both transmitter and receiver functions.

Transmitter 10TX includes phase vector setting unit 11B1, multicarrier modulator 11B2, DAC 12A, band pass filter 13 and coupler 16. Phase vector setting unit 11B1 rotates the phases of transmission data corresponding to respective subcarrier signals included in an OFDM multicarrier signal, by generating the randomized phase vectors for the respective subcarrier signals. Multicarrier modulator 11B2 modulates the multicarrier signal as its transmission data, using an Inverse First Fourier Transform (IFFT) or an Inverse Discrete Wavelet Transform (IDWT). DAC 12A converts digital signals in the modulated multicarrier into analog signals for output. Among the input analog signals, band pass filter 13 passes only signals in a necessary frequency band. Coupler 16 superimposes the input analog signals onto power line 1A, which serves as a transmission line. Phase vector setting unit 11B1 and multicarrier modulator 11B2 are included in PLC PHY block 11B. The analog signals in the multicarrier transmitted from transmitter 10TX are transmitted to receiver 10RX via power line 1A, or other transmission lines (not shown in the drawing) such as a television antenna line and a telephone line.

Phase vector is a set of values that indicate phases corresponding to respective subcarrier signals in a multicarrier signal. The signal phases of all the subcarriers are randomly set. In the above-described embodiment, phase vector setting unit 11B1 has functions of the phase vector modification unit.

The phase vector means a set of coefficients indicating a rotation degree of a signal point onto a complex coordinate plane. The signal point corresponds to each of a plurality of subcarriers, of which communication signal such as OFDM signal (multicarrier signal) consists. The set of coefficients may be any combination of coefficients so as to equalize time waveform levels of the communication signal. The set of coefficients may include predetermined coefficients or variable coefficients. The phase vector is often referred to as "carrier phase". The carrier phase with the predetermined coefficients is referred to as "determined stick carrier phase". The carrier phase with the variable coefficients is referred to as "random carrier phase". In this specification, "to rotate phase" is defined as "to rotate signal point onto a complex coordinate plane".

Receiver 10RX includes coupler 16, band pass filter 17, ADC 12D, multicarrier demodulator 11B3 and phase vector re-rotation unit 11B4. Coupler 16 separates predetermined analog signals from the received analog signals in the multicarrier. Among the separated analog signals, band pass filter 17 passes signals in a necessary frequency band. ADC 12D converts the input analog signals into digital signals. Multicarrier demodulator 11B3 demodulates those signals in the multicarrier as its reception data, using a First Fourier Transform (FFT) or a Discrete Wavelet Transform (DWT). Phase vector re-rotation unit 11B4 obtains the reception data by re-rotating the phase vectors of the demodulated signals in the multicarrier, and outputs the reception data to an equalizer (not shown in the drawing). Multicarrier demodulator 11B3 and phase vector re-rotation unit 11B4 are included in PLC PHY block 11B. Similarly, the equalizer is included in PLC PHY block 11B.

As described above, in the present embodiment, phase vector setting unit 11B1 and phase vector re-rotation unit 11B4 perform phase rotation on the phases of the received subcarrier signals in the multicarrier signal, thereby randomizing the phase of each of the subcarrier signals. This allows to equalize time waveform levels, thus preventing occurrence of significant peaks overlapping a plurality of time waveforms. Applied phase vectors may be predetermined or changed according to the condition of the transmission line or the condition of another network.

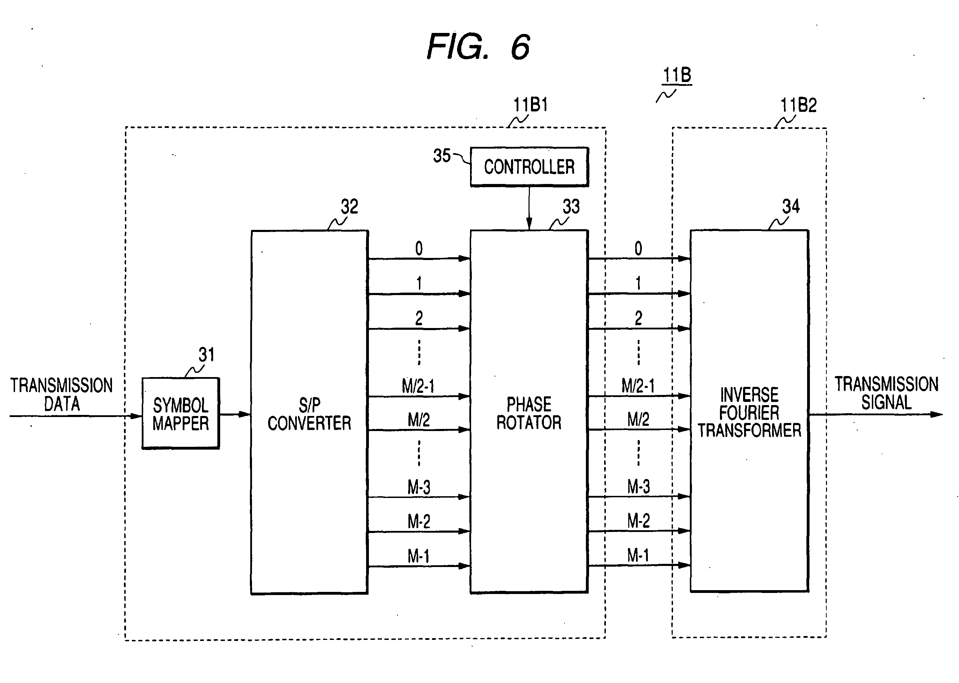

In the first configuration example, the inverse Fourier transform is used for multicarrier signal modulation as shown in Fig. 6. Phase vector setting unit 11B1 of transmitter 10TX includes symbol mapper 31, serial/parallel (S/P) converter 32, phase rotator 33 and controller 35. Symbol mapper 31 maps transmission data in the form of serial data onto a complex coordinate plane. S/P converter 32 converts the serial data into parallel data corresponding to each of the subcarriers in the multicarrier. Phase rotator 33 rotates each phase of the parallel data. Controller 35 controls the phase vectors rotated by phase rotator 33. Multicarrier modulator 11B2 of transmitter 10TX includes inverse Fourier transformer 34 that performs multicarrier modulation through the inverse Fourier transform of the phase-rotated parallel data.

Symbol mapper 31 performs the first modulation in which transmission data in the form of bit data is converted into symbol data, with a total of M-2 subcarriers mapped onto a complex coordinate plane (M signifies the number of subcarriers hereinafter). S/P converter 32 converts the serial data (transmission symbols) generated through the first modulation, to be sequentially input, into parallel data corresponding to each of the subcarriers in the mulicarrier signal. Then, phase rotator 33 performs phase rotation on the input parallel data. In this example, the maximum number of subcarriers in the form of parallel data to be phase-rotated is M-2. Inverse Fourier transformer 34 performs multicarrier modulation through the inverse Fourier transform of the phase-rotated subrarriers in the form of parallel data, generating the transmission signals in the multicarrier. The S/P converter can be used before the symbol mapper. (For more detailed information on symbol mapping, see U.S. publication Nos. 2003 - 0156014 and 2004 - 0057529.)

Controller 35 supplies control signals to phase rotator 33, controlling changes of phase vectors. In this example, controller 35 may include a random value generator. The random value generator generates random values using, for example, a PN (Pseudo Noise) system, supplies the random values to phase rotator 33 as control signals for the phase vectors, and performs phase rotation on each of its targeted subcarriers. As the above-mentioned random values, two values, i.e., 0 and π are generated. Or, controller 35 may include a cyclic shift designator that generates control signals (phase shift values) for a cyclic shift operation, supplies the control signals to phase rotator 33 and performs phase rotation on each of the subcarriers to be used for the communications. In this embodiment, controller 35 and phase rotator 33 have functions of the phase vector modification unit. The cyclic shift in performing phase rotation can make a plurality of phase vectors without storing the plurality of phase vectors in a memory in advance.

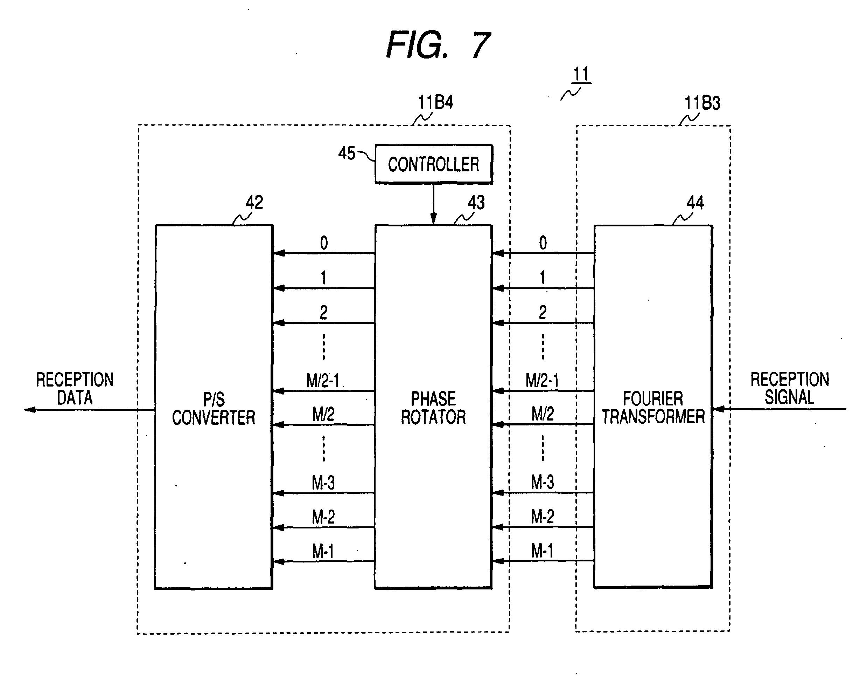

In the first configuration example, the Fourier transform is used for multicarrier signal demodulation as shown in Fig. 7. Multicarrier demodulator 11B3 of receiver 10RX includes Fourier transformer 44 that performs multicarrier demodulation through the Fourier transform of the reception signals. Phase vector re-rotation unit 11B4 of receiver 10RX includes phase rotator 43, Parallel/Serial (P/S) converter 42 and controller 45. Phase rotator 43 rotates the phase of the parallel data corresponding to each of the demodulated subcarriers. Parallel/Serial (P/S) converter 42 converts the parallel data, corresponding to each of the phase re-rotated subcarriers, into serial data. Controller 45 controls the phase vectors rotated by phase rotator 43.

Fourier transformer 44 performs the Fourier transform on the reception signals to demodulate the multicarrier signal, and generates parallel data corresponding to each of the subcarriers in the multicarrier. Phase rotator 43 re-rotates the parallel data individually by rotating the phases of the input parallel data. Then, P/S converter 42 converts the input parallel data, each packet of which corresponds to each of the subcarriers in the multicarrier, into serial data to obtain the reception data. Changing the order of phase rotator 43 and P/S converter 42 causes no operational difficulties.

Controller 45 supplies control signals to phase rotator 43, controlling changes of phase vectors. In this example, controller 45 may include a random value generator. The random value generator generates random values using, for example, a PN (Pseudo Noise) system, supplies the random values to phase rotator 43 as control signals for the phase vectors, and performs phase rotation on each of the subcarriers to be used for the communications. As the above-mentioned random values, two values, i.e., 0 and π are generated. Or, controller 45 may include a cyclic shift designator that generates control signals (phase shift values) for a cyclic shift operation, supplies the control signals to phase rotator 43 and performs phase rotation on each of its targeted subcarriers.

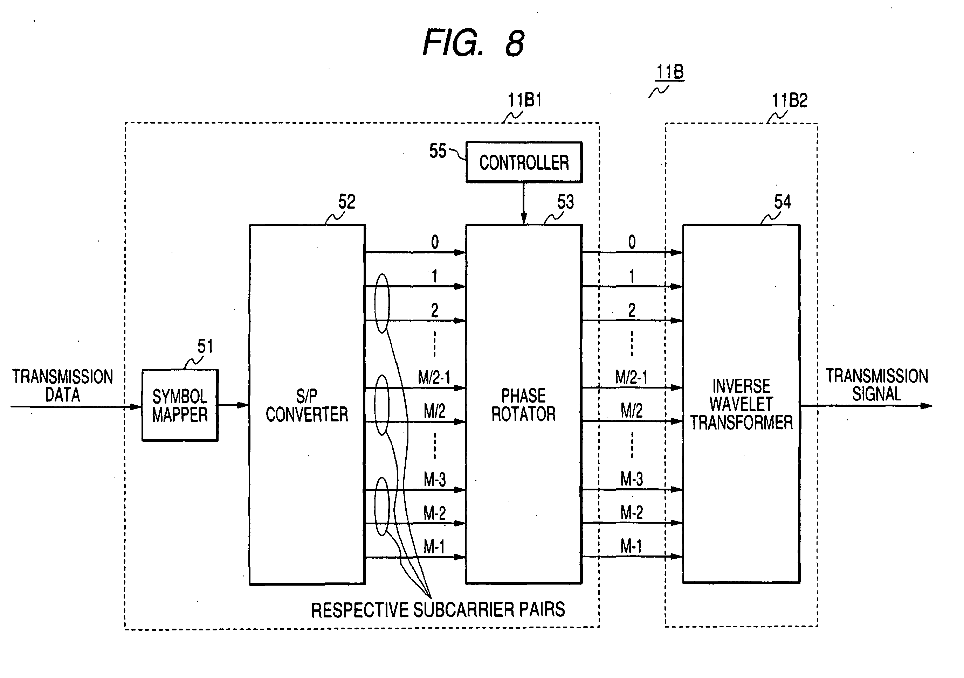

In the second configuration, the inverse wavelet transform is used for multicarrier signal modulation as shown in Fig. 8. Phase vector setting unit 11B1 of transmitter 10TX includes symbol mapper 51, S/P converter 52, phase rotator 53 and controller 55. Symbol mapper 51 maps transmission data in the form of serial data onto a complex coordinate plane. S/P converter 52 converts the serial data into parallel data corresponding to each of the subcarriers in the multicarrier signal. Phase rotator 53 rotates each phase of the parallel data. Controller 55 controls the phase vectors rotated by phase rotator 53. Multicarrier modulator 11B2 of transmitter 10TX includes inverse wavelet transformer 54 that performs multicarrier modulation through the inverse wavelet transform of the phase-rotated parallel data.

Symbol mapper 51 performs the first modulation in which transmission data in the form of bit data is converted into symbol data, with a total of M-1 subcarriers mapped onto a complex coordinate plane. S/P converter 52 converts the serial data (transmission symbols) generated through the first modulation, to be sequentially input, into parallel data corresponding to each of the subcarriers in the mulicarrier signal. Then, phase rotator 53 performs phase rotation on the input parallel data. In this case, a (2n-1)^{th} input (n is a positive integer) is considered as the common-mode component of the complex data, while a 2n ^{th} input is considered as the orthogonal component (suppose 1 ≤ n ≤ M/2-1) of the complex data. The number of subcarriers is considered as 0 ∼ M - 1. Complex subcarriers are made of subcarrier pairs. The phase of each of the subcarriers is rotated the same way as the case using the inverse Fourier transform. In this example, the maximum number of subcarriers in the form of parallel data to be phase-rotated is M/2-1, which is different from the case where the inverse Fourier transform is used. Inverse wavelet transformer 54 performs multicarrier modulation through the inverse wavelet transform of the phase-rotated subcarriers in the form of parallel data, thereby generating transmission signals in the multicarrier. The S/P converter may be used before the symbol mapper.

Controller 55 supplies control signals to phase rotator 53, controlling changes of phase vectors. In this example, controller 55 may include a random value generator. The random value generator generates random values using, for example, a PN (Pseudo Noise) system, supplies the random values to phase rotator 53 as control signals for the phase vectors, and performs phase rotation on each of its targeted subcarriers. As the above-mentioned random values, two values, i.e., 0 and π are generated. Or, controller 55 may include a cyclic shift designator that generates control signals (phase shift values) for a cyclic shift operation, supplies the control signals to phase rotator 53 and performs phase rotation on each of the subcarriers to be used for the communications. In this embodiment, controller 55 and phase rotator 53 have functions of the phase vector modification unit.

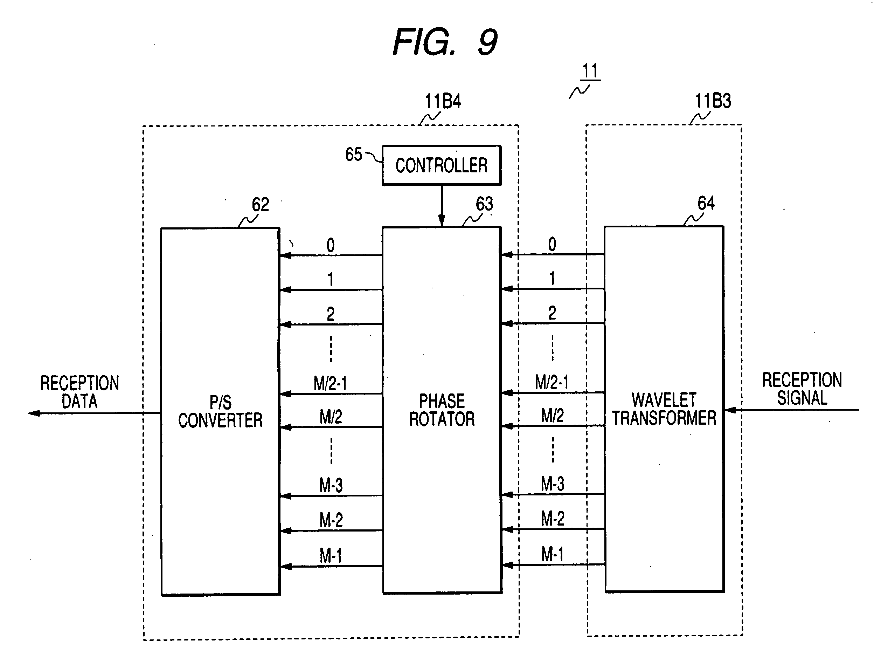

In the second configuration example, the wavelet transform is used for multicarrier signal demodulation as shown in Fig. 9. Multicarrier demodulator 11B3 of receiver 10RX includes wavelet transformer 64 that performs multicarrier demodulation through the wavelet transform of the reception signals. Phase vector re-rotation unit 11B4 of receiver 10RX includes phase rotator 63, P/S converter 62 and controller 65. Phase rotator 63 rotates the phase of the parallel data corresponding to each of the demodulated subcarriers. P/S converter 62 converts the parallel data, corresponding to each of the phase re-rotated subcarriers, into serial data. Controller 65 controls the phase vectors rotated by phase rotator 63.

Wavelet transformer 64 performs the wavelet transform on the reception signals to demodulate the multicarrier signal, and generates parallel data corresponding to each of the subcarriers in the multicarrier. Phase rotator 63 re-rotates the parallel data individually by rotating the phases of the input parallel data. Then, P/S converter 62 converts the input parallel data, each packet of which corresponds to each of the subcarriers in the multicarrier, into serial data to obtain the reception data. Changing the order of phase rotator 63 and P/S converter 62 causes no operational difficulties.

Controller 65 supplies control signals to phase rotator 63, controlling changes of phase vectors. In this example, controller 65 may include a random value generator. The random value generator generates random values using, for example, a PN (Pseudo Noise) system, supplies the random values to phase rotator 63 as control signals for the phase vectors, and performs phase rotation on each of its targeted subcarriers. As the above-mentioned random values, two values, i.e., 0 and π are generated. Or, controller 65 may include a cyclic shift designator that generates control signals (phase shift values) for a cyclic shift operation, supplies the control signals to phase rotator 63 and performs phase rotation on each of the subcarriers to be used for the communications.

In the configurations illustrated in Figs. 6 and 8, when it is determined that phase rotations by phase rotators 33 and 53 increase communication signal errors, thus damaging communication performance, controllers 35 and 55 change the phase vectors to generate new phase vectors and supply the generated phase vectors to phase rotators 33 and 53. When communication performance continues to decline or does not improve after the phase changes, further new phase vectors are generated to be supplied to phase rotators 33 and 53. Through these processes, the rotation degrees are changed at phase rotators 33 and 53, by which time waveform levels are equalized as much as possible to prevent deterioration of communication performance. Further, in the initial stage, when building a network or connecting to an existing network, a controller may change a phase vector according to the code of the network to be connected, such as a network key. The network code here is ID information that enables mutual identifications between different networks, such as an SSID (Service Set Identifier) used with the IEEE802.11 standard.

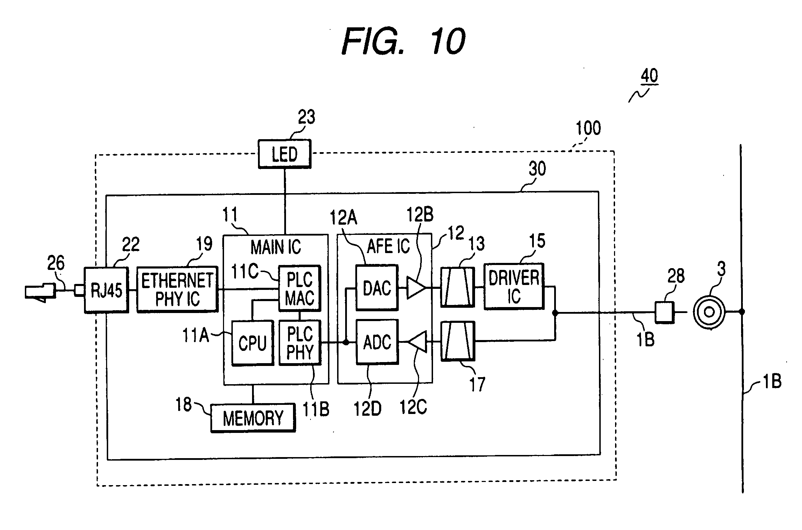

Communication apparatus 40 shown in Fig. 10 is a modem utilizing coaxial cables 1 B as transmission lines. Communication apparatus 40 has the same configuration as communication apparatus 10 illustrated in Fig. 4 except that communication apparatus 40 lacks coupler 16 and uses coaxial cables 1 B instead of telephone lines as transmission lines. Therefore, the description of the same configuration is omitted. Communication apparatus 40 includes coaxial cable 1 B of which end is provided with coaxial connector 28. Coaxial cable 1B connects to driver IC 15 and band pass filter 17. Communication apparatus 40 connects to another coaxial cable 1 B via coaxial connector 28 and antenna outlet 3.

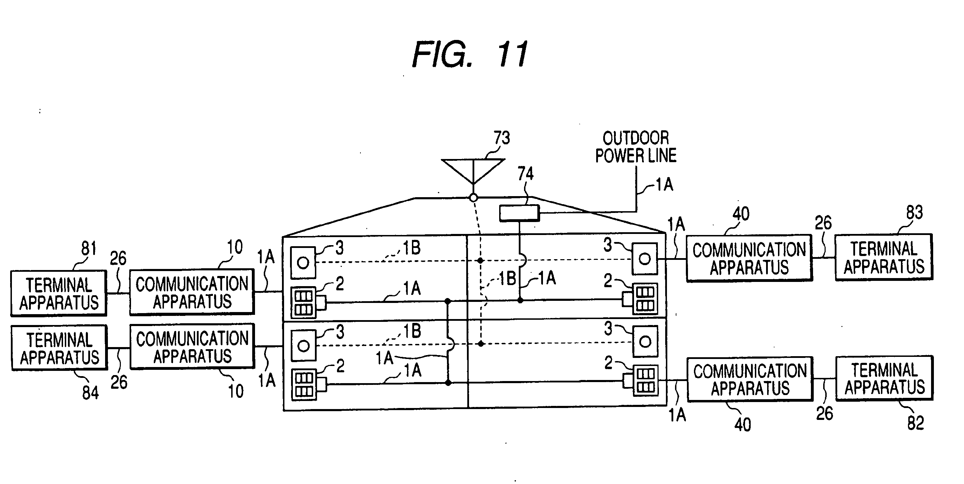

Fig. 11 illustrates a two-story residence with two rooms on each floor, totaling four rooms. The residence connects to outdoor power lines 1A (lead-in wires). Power lines 1A are wired through the residence from power distribution panel 74, which receives power supply. Power lines 1A connect to power outlets 2, which are installed in each room. Further, coaxial cables 1 B are wired through the residence. Coaxial cables 1 B connect to TV antenna 73 as television antenna cables. Coaxial cables 1 B connect to antenna outlets 2, which are installed in each room.

In the example shown in Fig. 11, communication apparatuses 10, such as PLC communication apparatuses (PLC modems) that perform communications via respective power lines, connect to power outlets 2 in the left-side room of the second floor and the right-side room of the first floor. Further, communication apparatuses 40 that perform communications via respective coaxial cables 1 B connect to antenna outlets 3 in the right-side room of the second floor and the left-side room of the first floor. As a whole, communication apparatuses 10 and power lines 1 A, on the one hand, and communication apparatuses 40 and coaxial cables 1B, on the other hand, make up different wire communication networks. Communication apparatuses 10 connect to terminal apparatuses 81 and 84, while communication apparatuses 40 connect to terminal apparatuses 82 and 83.

The wire communication system in the above-described configuration enables wire communications among a plurality of networks by transmitting communication signals within each network, in which communication apparatuses are mutually connected. It is further possible to connect power outlet 2 with antenna outlet 3 via a bridge apparatus or the like, building a network to allow transmission of communication signals between power line 1 A and coaxial cable 1 B. Further, one system network may configure a plurality of different logical networks.

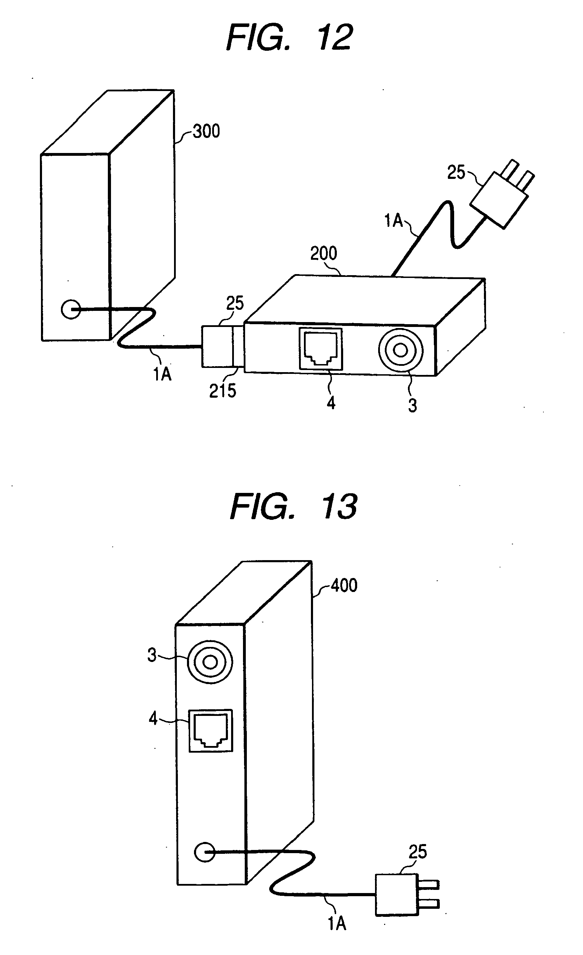

The communication apparatus having the second configuration, as shown in Fig. 12, includes communication adapter 200 and power line communication apparatus 300, which connects to communication adapter 200. Communication adapter 200 includes plug 25 for connection to an indoor power outlet, power line 1A, telephone connector (RJ-11) 4 for connection to a telephone line, coaxial connector (F terminal) 3 for connection to a coaxial cable and power connector 215 for connection to power lines 1A. Connecting plug 25 of power line 1A of power line communication apparatus 300 to power connector 215 establishes connection between communication adapter 200 and power line communication apparatus 300. Communication adapter 200 is equipped with a switch (not shown in the drawing). Plug 25 connects to the switch via power line 1A. By operating the switch, the user can switch connection between coaxial connector 3 and telephone line connector (RJ-11) 4. For instance, switching to coaxial connector 3 enables signal transmission between the power line and coaxial cable.

The communication apparatus of the third configuration, as shown in Fig. 13, is configured as power line communication apparatus 400 integrated with the communication adapter having the first configuration. Power line communication apparatus 400 includes plug 25 and power line 1A for connection to an indoor power outlet, telephone line connector (RJ-11) 402 for connection to a telephone line and coaxial connector 3 for connection to a coaxial cable.

The above-described communication adapter 200, power line communication apparatus 300 and power line communication apparatus 400 integrated with the communication adapter are connectable to a plurality of transmission lines such as power lines 1 A and coaxial cables 1 B. This allows various types of communication among a plurality of networks: communication through connection to one of the plurality of transmission lines; communication through connection to the plurality of transmission lines, which configure networks for independent communications; and communication via the plurality of mutually connected transmission lines. Such a communication apparatus is capable of preventing interference from other networks by changing the phase vectors of communication signals distinctly for respective networks.

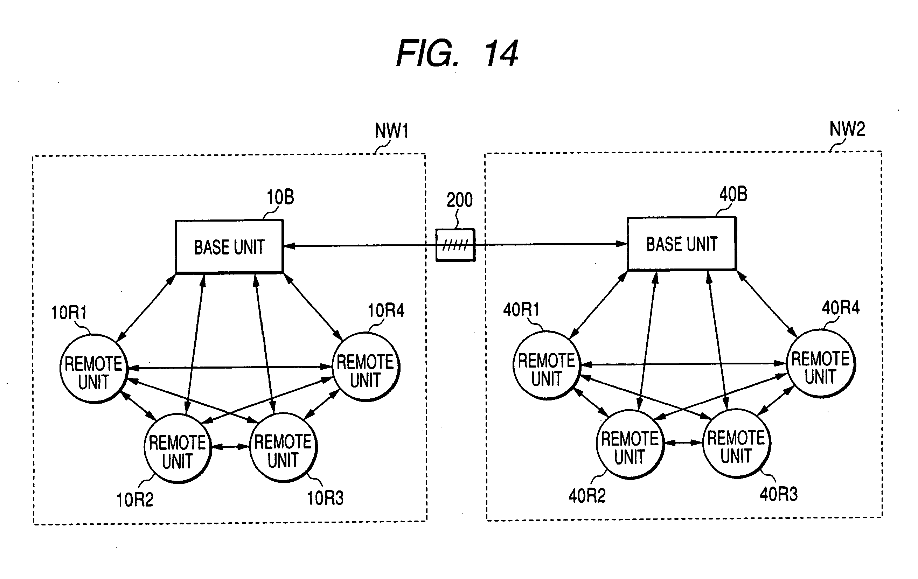

Fig. 14 shows a conceptual configuration that includes a plurality of networks to which the communication apparatuses of the present embodiment are applied. Network NW1 includes communication apparatuses 10 of the present embodiment shown in Fig. 4. One of the communication apparatuses in network NW1 is base unit 10B, and the others are remote units 10R1 - 10R4, all of which are used to transmit communication signals within network NW1 as well as to control network NW1. In the following description, to differentiate the base unit from the remote units, the base unit is referred to as communication apparatus 10B, while the remote units are referred to as communication apparatuses 10R1 - 10R4. When no particular distinction is necessary, they are all referred to as "communication apparatuses 10".

Similarly, network NW2 includes communication apparatuses 40 of the present embodiment shown in Fig. 10. One of the communication apparatuses in network NW2 is base unit 40B, and the others are remote units 40R1 - 40R4, all of which are used to transmit communication signals within network NW2 as well as to control network NW2. In the following description, to differentiate the base unit from the remote units, the base unit is referred to as communication apparatus 40B, while the remote units are referred to as communication apparatuses 40R1 - 40R4. When no particular distinction is necessary, they are all referred to as "communication apparatuses 40". Within network NW2, communications are performed between the base unit and the remote units, or between the remote units. It is further possible, between networks NW1 and NW2, that different base units, i.e., base unit 10B and base unit 40B exchange communications to check the status of the networks.

In the present embodiment where a plurality of these networks are present, phase vectors to be used by communication apparatuses 10 and 40 are changed between different networks, e.g., networks NW1 and NW2, so that the networks do not use the same phase vector. This prevents data transmission between the different networks. More specifically, when there are a plurality of logically/physically separated networks, the controllers of communication apparatuses 10 and 40 each change and set a phase vector to be used for the apparatus to which they each belong, so that the phase vector of the network to which their apparatuses belong is different from the phase vector for the other network.

The following describes an operation for changing a phase vector by the communication apparatus having the above-described configuration according to the present embodiment. In the present embodiment, for example, base unit 10B or remote units 10R1 - 10R4 in network NW1 shown in Fig. 14 detects the presence of another network NW2 through detection of a preamble. Then, within network NW1, base unit 10B sends a control signal to remote units 10R1 - 10R4 and changes its phase vector. In this case, the base unit has controller's functions for controlling the network. The operation for changing the phase vector is mainly executed by the controller of each communication apparatus and its process is described in the following.

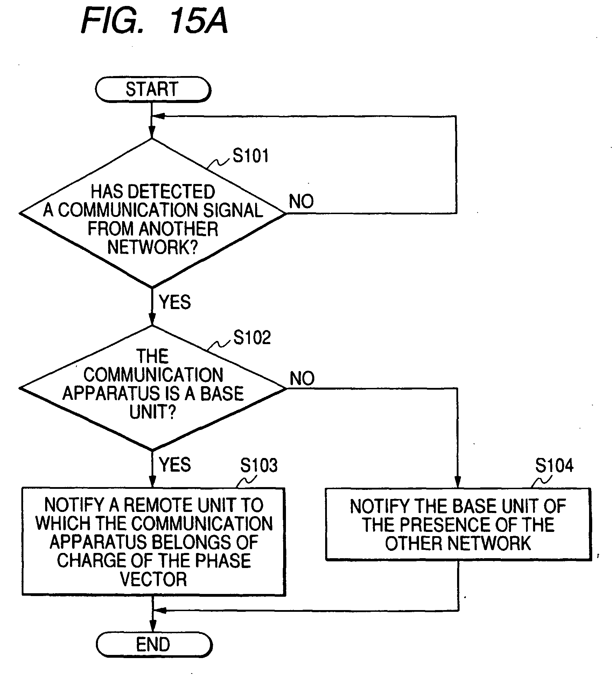

As shown in Fig. 15A, the controller (not shown in the drawing) of the communication apparatus determines whether or not it has detected a communication signal from the other network NW2, which differs from network NW1 to which the communication apparatus belongs, as a detection process of the communication signal (step S101). Here, it is possible to determine whether or not the detected signal is a network signal from the other network NW2 by judging the packets of the reception data. When the currently used phase vector is different from that of the other network NW2, no signal from the other network NW2 can be detected.

At step S101, when the communication signal from the other network NW2 has been detected, it is determined whether or not the communication apparatus is a base unit (step S102). On the other hand, when no communication signal from the other network NW2 has been detected, the process at step S101 is repeated until the signal is detected.

At step S102, when it is determined that the communication apparatus is the base unit, base unit 10B changes the phase vector of the communication apparatus and sends a notice of change of the phase vector to all the apparatuses (remote units 10R1 - 10R4) connected to network NW1, to which the communication apparatus belongs (step S103). On the other hand, when the communication apparatus is a remote unit, the remote unit sends a notice of the presence of the other network NW2 to base unit 10B of network NW1 to which the communication apparatus belongs (step S104). Upon receiving this notice, base unit 10B sends a notice of change of the phase vector to all the remote units, i.e., 10R1 - 10R4 of network NW1 to which the communication apparatus belongs, and changes the phase vector of the communication apparatus.

Base unit 10B and remote units 10R1 - 10R4 that have received the notice of change of the phase vector from base unit 10B individually change their phase vectors based on instructions from the controller as described above. More specifically, the controller changes random values for generating phase vectors, or change phase shift values for cyclic shift, thereby changing the phase vector by changing the degree rotation for each subcarrier at the phase rotator.

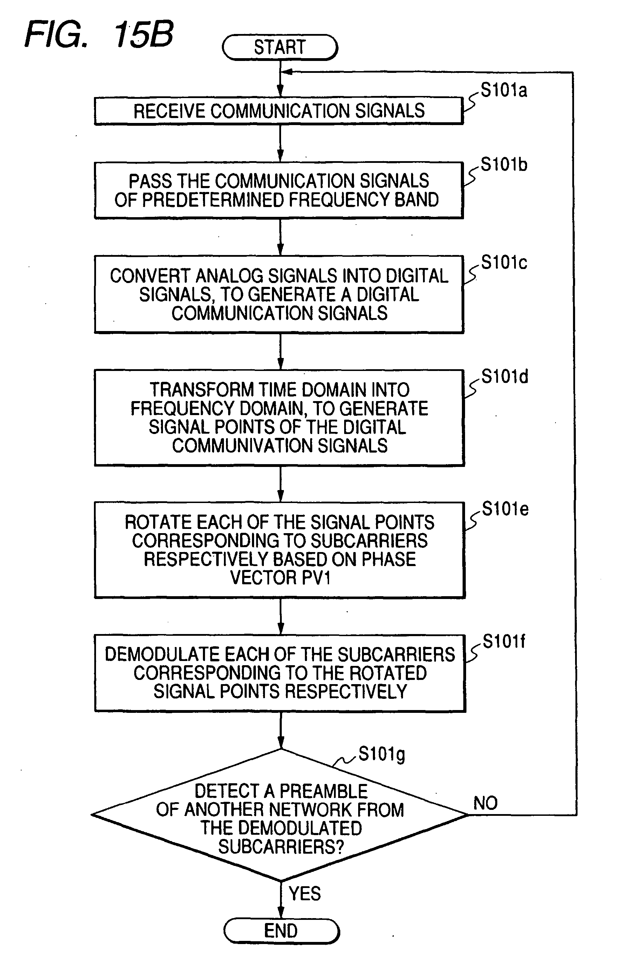

The following describes in detail the detection process of the communication signal (step S101) shown in Fig.15A using Fig.4 and Fig.15B. As shown in Fig.15B, coupler 16 separates the communication signals from an alternating voltage in power line 1 A, to receive the communication signal through power connector 21 (step S101 a). Band pass filter 17 passes the communication signals of predetermined frequency band such as 2MHz - 30MHz in Japan or 1.705-30MHz in the United States of America (step S101b). Amplifier 12C amplifies the communication signals passed through band pass filter 17. AD converter 12D converts analog signals into digital signals, to digital communication signals (step S101 c). PLC PHY block 11B transforms time domain into frequency domain regarding the digital communication signals by FFT. PLC PHY block 11B respectively rotates each of the signal points corresponding to the plurality of subcarriers of the digital communication signals, based on phase vector PV1 (step S101d). PLC PHY block 11B demodulates each of the subcarriers corresponding to the rotated signal points respectively. PLC PHY block 11B judges if the preamble of another network (e.g. NW2) is detected or not. The preamble is an example of network information regarding network (step S101g). When PLC PHY block 11B does not detect the preamble, step S101g is performed again (step S101g No). When PLC PHY block 11B detects the preamble, the process is ended (step S101g Yes) and PLC PHY block 11B changes phase vector PV1 into phase vector PV2 using the random values or the cyclic shift.

When the other network is no longer detected after changing the phase vector, the phase vector may be re-rotated. In this case, the base unit sends, to the remote units, a notice of re-rotating the phase vector, after which the remote units change their phase vectors.

The following describes an apparatus registration process performed by the communication apparatus of the present embodiment. As described in the embodiment, the communication apparatus capable of changing a phase vector sets a phase vector for a communication apparatus, e.g., a newly purchased remote unit to be newly connected to a network before use, so as to register the apparatus. Such an apparatus registration process is mainly executed by the controller of the communication apparatus, which serves as a remote unit.

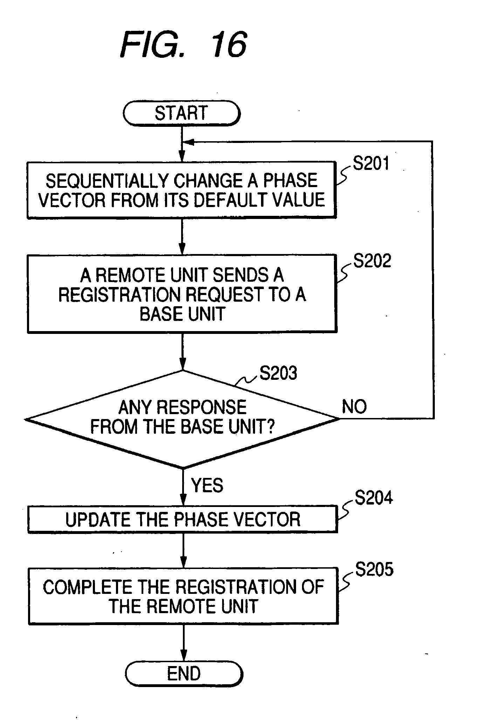

As shown in Fig. 16, first, a process is executed for sequentially changing (performing cyclic shift on) the phase vector of the communication apparatus from its default value (step S201). The communication apparatus has its initial default value set, with which the process proceeds to the following step. Next, the communication apparatus (remote unit) sends a registration request to a base unit (step S202) and determines whether or not the base unit sends back a response to the registration request (step S203). When there is no response sent from the base unit, the process returns to step S201, where the phase vector is sequentially changed from its default value to the following value. The process at steps S201-203 is repeated until a response (e.g., beacon) from the base unit is detected.

When the response from the base unit is detected, the communication apparatus updates its phase vector using a phase vector value at the time of the detection (step S204), and registers the communication apparatus (remote unit), so as to perform communications using the updated phase vector (step S205). This completes the registration process for the remote unit.

For instance, when the base unit is using a phase vector with a default value, a response is obtained to the first registration request, which is sent from the remote unit using the phase vector with the default value. While using the phase vector with the default value, a registration process for the remote unit is performed. On the other hand, when the phase vector of the base unit has been changed, the base unit cannot receive packets from the remote unit that is using the phase vector with the default. Therefore, it is possible to determine and set the same phase vector as that of the base unit by sequentially changing the phase vector and sending a registration request, and by detecting a response to this registration request.

As described above, in the present embodiment where a plurality of networks are present, each network changes its phase vector used by its communication apparatus so that different networks have different phase vectors. This may prevent data reception from another network. Therefore, unnecessary carrier detections can be eliminated to improve transmission efficiency for data communications when there are a plurality of neighboring networks using different transmission mediums.

### (Second Embodiment)

The following describes a second embodiment. In the second embodiment, a base unit does not send a notice of change of a phase vector to a remote unit. Instead, the base unit and the remote unit independently change their phase vectors. As a configuration of a communication apparatus according to the second embodiment is identical to the configuration shown in Figs. 1 and 9, its description is omitted. A circuit configuration is not limited to Fig. 4 and can take the form of the hardware block indicated in Fig. 10. Further, an external configuration is not limited to Fig. 1 and can take the form of the configuration indicated in Fig. 12 or Fig. 13.

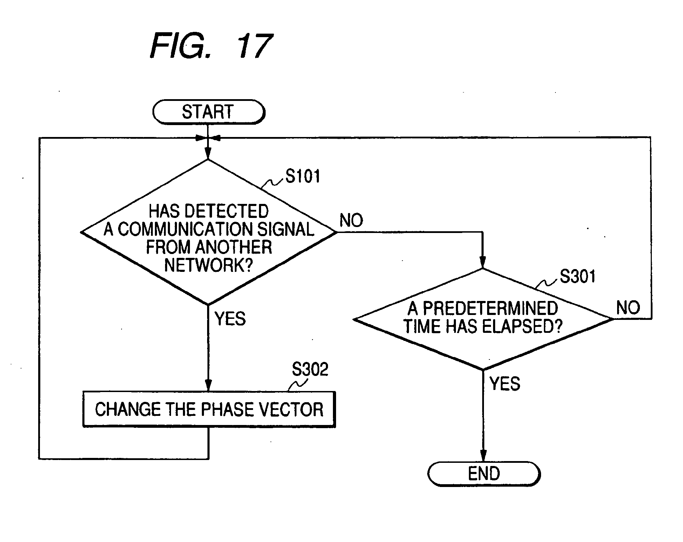

The following describes another process for changing a phase vector by the base unit according to the second embodiment, with reference to Fig. 17. Steps identical to those of Fig. 15 are assigned the same numbers. In the second embodiment, only network NW 2 shown in Fig. 14 is included, eliminating network NW1 shown in Fig. 14. In this configuration, two communication apparatuses (e.g., base unit 10B and remote unit 10R1) are newly connected to a power line.

Controller 35 of base unit 10B retrieves from a memory (not shown in the drawing) phase information that sets a phase vector at a predetermined value (e.g., subcarrier Nos. 0, 1, ···, 510, 511 are set to 0, π, ···, π, π). After retrieving the phase information, controller 35 of base unit 10B sets a value indicated in the phase information as the phase vector of the communication apparatus. The process for changing the phase vector indicated in Fig. 17 can be initiated both manually and automatically. For instance, it is possible to provide an input unit within the communication apparatus (e.g., a mechanical switch, or a user interface switch that appears on the display), so that users can manually initiate the process for changing the phase vector. It is also possible to provide a detector (e.g., a voltage detection circuit) that detects commercial voltage supplied from the power line to the communication apparatus or to equip a plug with a mechanical switch that detects when the communication apparatus is connected to an outlet, so that the process for changing the phase vector starts automatically.

Controller 35 detects a communication signal from another network (step S101). More specifically, while detecting a communication signal (multicarrier signal) transmitted via the power line, controller 35 detects the communication signal from the other network, when the phase vector of the detected communication signal is identical to the set phase vector.

When controller 35 detects the communication signal from the other network (step S101: Yes), the process for changing the phase vector is performed as described in the first embodiment (step S302). The memory stores a plurality of pieces of phase information on mutually different phase vectors. Controller 35 retrieves phase information indicating a predetermined value (e.g., subcarrier Nos. 0, 1, ···, 510, 511 are set to π, 0, ···, π, 0) different from the value indicated in the initially retrieved phase vector, and changes the phase vector, after which the process returns to step S101. In other words, this phase changing process is repeated while the communication signal from the other network is being detected. Therefore, the phase vector is changed and set so as to be different from the phase vector of the detected communication signal from the other network.

Controller 35 counts the elapsed time after the phase vector is set. When no communication signal is detected from the other network (step S101: No), it is determined whether a predetermined time (e.g., one minute) has elapsed (step S301). When the predetermine time has not elapsed (step S301: No), the process returns to step S101. When the predetermined time has elapsed (step S301: Yes), the ongoing process ends without executing the process for changing the phase vector. More specifically, when the phase vector of the other network, which is identical to the originally set or changed phase vector, has not been detected during the predetermined time, the ongoing process ends without re-changing the set phase vector. In other words, the process for changing the phase vector is terminated.

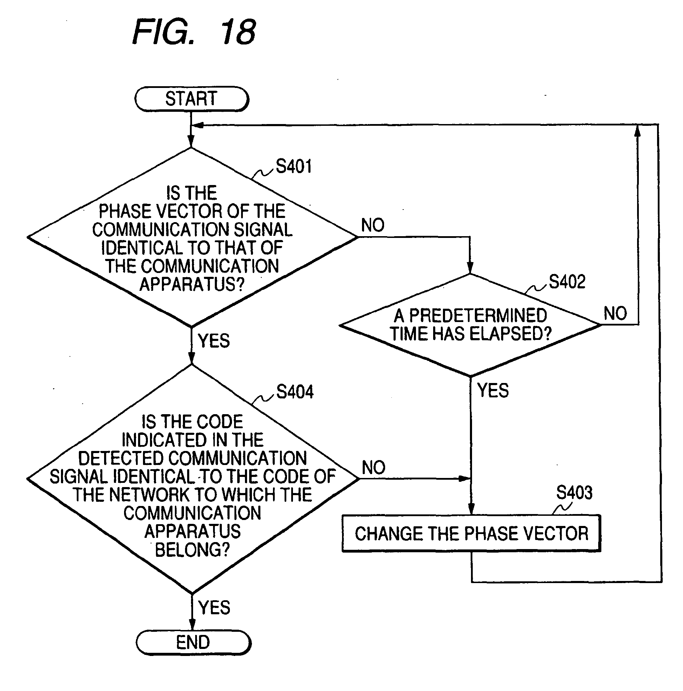

The following describes another process for changing a phase vector by a remote unit according to the second embodiment, with reference to Fig. 18. In the second embodiment, base unit 10B is already connected to the power line, has a preset phase vector and is outputting a communication signal such as a beacon.

Remote unit 10R1 has a memory (not shown in the drawing). The memory stores a plurality of pieces of phase information as does the base unit. Controller 35 of remote unit 10R1 retrieves phase information from the memory, and then sets a value indicated in the phase information as the phase vector of the communication apparatus. The process for changing the phase vector indicated in Fig. 18 may be initiated both manually and automatically.

Controller 35 of remote unit 10R1 detects a communication signal transmitted from another communication apparatus, and determines whether or not the phase vector of the communication signal is identical to the set phase vector (step S401). Controller 35 of remote unit 10R1 counts the elapsed time after the phase vector is set. When it is determined that the phase vector of the detected communication signal is not identical to the set phase vector (step S401: No), it is determined whether or not a predetermined time (e.g., two minutes) has elapsed (step S402). When it is determined that the predetermined time has not elapsed (step S402: No), the process returns to step S401.

After the predetermined time has elapsed (step S402: Yes), controller 35 of remote unit 10R1 executes the process for changing the phase vector as does base unit 10B (step S403). The memory stores a plurality of pieces of phase information on mutually different phase vectors as does base unit 10B. Controller 35 of remote unit 10R1 retrieves phase information indicating a predetermined value different from the value indicated in the initially retrieved phase information, and changes the phase vector. After the phase vector is changed, the process returns to step S401. In other words, when the communication signal having the same phase vector has not been detected during the predetermined time, it is determined that no communication signal transmitted from the base unit is detected.

When controller 35 of remote unit 10R1 determines that the phase vector of the detected communication signal is identical to the phase vector of the network to which the communication apparatus belongs (step S401: Yes), it is determined whether a code of the other network indicated in the detected communication signal is identical to a code of the network to which the communication apparatus belongs (step S404). When these network codes are not identical (step S404: No), controller 35 of remote unit 10R1 executes the process for changing the phase vector as described above at step S403. In other words, since the network codes are not identical, although the two networks have the same phase vector (that is, the phase vector of the other network is coincidentally identical to the phase vector of the network to which the communication apparatus belongs), it is determined that no communication signal transmitted from the base unit is detected.

On the other hand, when the code of the network indicated in the detected communication signal is identical to the code of the network to which the communication apparatus belongs (step S404: Yes), that is, when the communication signal transmitted from base unit 10B has been detected, the on-going process ends without executing the process for changing the phase vector. More specifically, since the changed and set phase vector is identical to the phase vector of the network to which the communication apparatus belongs, the on-going process ends without re-changing the changed and set phase vector. In other words, the process for changing the phase vector is terminated.

As described above, in the second embodiment, the phase vector of one network is changed and set so that it is different from that of the other network without mutual notification between the base and remote units, thereby suppressing an excessive process for changing a phase vector and enabling a further reduction in the processing load for changing the phase vector.

### (Third Embodiment)

The following describes a third embodiment. Since a configuration of a communication apparatus according to the third embodiment is identical to the configuration shown in Figs. 1 and 9, its description is omitted. A circuit configuration is not limited to Fig. 4 and can take the form of the hardware block indicated in Fig. 10. Further, an external configuration is not limited to Fig. 1 and can take the form of the configuration indicated in Fig. 12 or Fig. 13.

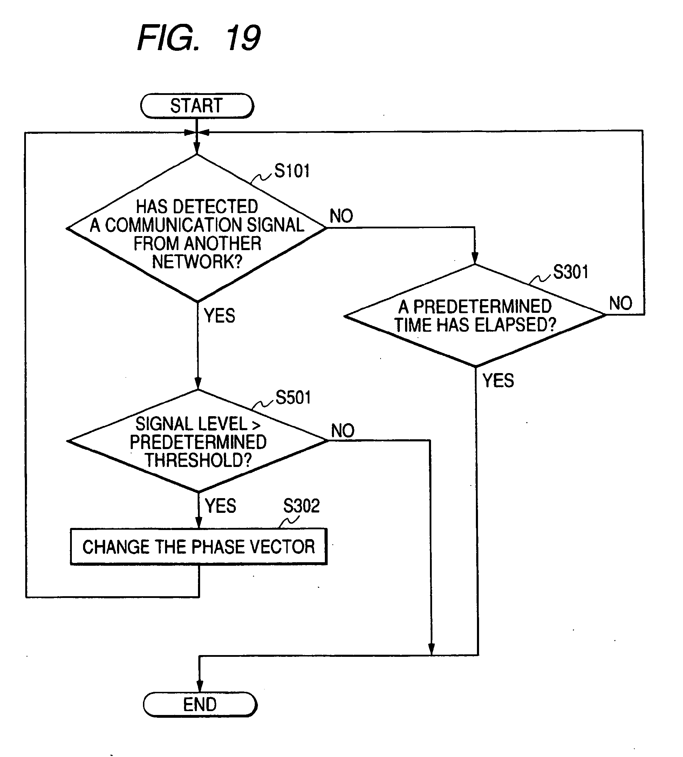

The following describes another process for changing a phase vector by a base unit according to the third embodiment, with reference to Fig. 19. Figs. 18 and 19 are identically configured except for step S501 of Fig. 19. Therefore, steps identical to those of Fig. 18 are assigned the same numbers, and descriptions thereof are thus omitted.

When a communication signal transmitted from another network has been detected (step S101: Yes), controller 35 of base unit 10B determines whether or not a signal level (e.g., voltage or power) of the detected communication signal is at a predetermined threshold or higher (step S501). The predetermined threshold may be a value that does not substantially lower communication efficiency even if interference occurs between communication signals from the two networks, that is, the network to which the communication apparatus belongs and the other network. When it is determined the signal level is not higher than the predetermined threshold (step S501: No), the on-going process ends without executing the process for changing the phase vector. On the other hand, when it is determined that the signal level is higher than the predetermined threshold (step S501: Yes), the process for changing the phase vector is executed (step S302).

As described above, only when the signal level of the detected communication signal is higher than the predetermined threshold, the process for changing the phase vector is executed. Therefore, even when the other network has the same phase vector, the process for changing the phase vector is not executed, thereby enabling a further reduction in the processing load for changing the phase vector.

In the above-described embodiments, descriptions are provided for cases where different transmission lines, i.e., power lines and coaxial cables, are used as an example of different networks. However, different types of transmission lines do not necessarily have to be used. For instance, when building power-line networks in individual residences of a collective housing area, one network built in a predetermined residence and another network built in another residence can change their phase vectors to avoid using the same phase vector. In this case, each network includes at least two PLC modems and the relationship between such modems does not necessarily have to involve a base unit and a remote unit.

### Industrial Applicability

The present invention has effects of preventing interference between different networks during data communications using the multicarrier communication system and of improving transmission efficiency. The present invention is useful, for example, in the communication apparatus and the communication method thereof that are capable of data communications using the multicarrier communication system, such as power line communications.

## Claims

1. A communication apparatus (10) for performing multicarrier communication in a first network (NW1), wherein the communication apparatus (10) comprises:
means for detecting a communication signal from a second network (NW2) with a phase vector identical to a first phase vector used by the commnication apparatus in the first network (NW1),
a phase vector modification unit (45) adapted - when said communication apparatus (10) belonging to a first network (NW1) performs a multicarrier communication method via a transmission line (1A) connecting to another communication apparatus belonging to a second network (NW2) - to automatically change a phase vector corresponding to at least one of a plurality of subcarrier signals based on the detection of the means, so that the changed phase vector is different from said phase vector used by said another communication apparatus, wherein the plurality of subcarrier signals being included in a multicarrier signal; and
a phase rotator (43) adapted to rotate a phase of at least one of the plurality of subcarrier signals based on the phase vector changed by the phase vector modification unit (45).

2. The communication apparatus (10) according to claim 1,
wherein the phase vector modification unit (45) is adapted to change the phase vector, so that the phase vector is randomized for each of the subcarriers.

3. The communication apparatus (10) according to one of claims 1 and 2,
wherein, when a plurality of one of logically and physically separated networks are present, the phase vector modification unit (45) is adapted to change a phase vector to be used for the communication apparatus (10) itself, so that a network to which the communication apparatus (10) belongs and another network have different phase vectors.

4. The communication apparatus (10) according to claim 3,
wherein, when the communication apparatus (10) builds a network or when the communication apparatus (10) is connected to an existing network, the phase vector modification unit (45) is adapted to change the phase vector according to a code of the network to be set.

5. The communication apparatus (10) according to claim 3,
wherein, when detecting the another network, which differs from the network to which the communication apparatus (10) belongs, the phase vector modification unit (45) is adapted to change the phase vector.

6. The communication apparatus (10) according to claim 5, further comprising:
a phase vector setting unit (11B4) that is adapted to stop a phase vector changing process by the phase vector modification unit (45), when the phase vector modification unit (45) has not detected the another network during a predetermined time.

7. The communication apparatus (10) according to one of claims 5 and 6,
wherein, when detecting the another network, the phase vector modification unit (45) is adapted to further change the phase vector only when a signal level of a multicarrier signal used for the detected another network is higher than a predetermined threshold.

8. The communication apparatus (10) according to one of claims 6 and 7, further comprising:
a phase vector setting unit (11B4) that is adapted to stop the phase vector changing process by the phase vector modification unit (45), the communication apparatus (10) being a remote unit (10R) of a network including a base unit (10B) and the remote unit (10R),
wherein the phase vector modification unit (45) is adapted to detect a phase vector and a code of the network indicated in a multicarrier signal transmitted from another communication apparatus, and wherein the phase vector setting unit (11B4) is adapted to stop the phase vector changing process by the phase vector modification unit (45), when the phase vector detected by the phase vector modification unit (45) is identical to the phase vector of the network to which the communication apparatus (10) belongs, and when the code of the network detected by the phase vector modification unit (45) is identical to the code of the network to which the communication apparatus (10) belongs.

9. The communication apparatus (10) according to claim 3,
wherein, when detecting a communication apparatus of the another network, which differs from the network to which the communication apparatus (10) belongs, and when the communication apparatus (10) is a base unit (10B) of the network including the base unit (10B) and remote units (10R), the phase vector modification unit (45) is adapted to change the phase vectors of the communication apparatus (10) and all the remote units (10R) connected to the network to which the communication apparatus (10) belongs.

10. The communication apparatus (10) according to claim 3,
wherein, when detecting the communication apparatus of the another network, which differs from the network to which the communication apparatus (10) belongs, and when the communication apparatus (10) is a remote unit (10R) of the network including the base unit (10B) and remote units (10R), the phase vector modification unit (45) is adapted to notify the base unit (10B) of the network to which the communication apparatus (10) belongs of the presence of the another network.

11. The communication apparatus (10) according to one of claims 1 through 10, wherein the phase vector modification unit (45) includes a random value generator that is adapted to generate a random value by which a phase vector is generated.

12. The communication apparatus (10) according to one of claims 1 through 10, wherein the phase vector modification unit (45) includes a cyclic shift designator that is adapted to perform a cyclic shift on a phase vector.

13. The communication apparatus (10) according to one of claims 1 through 12, wherein, when determining the change of the phase vector deteriorates communication performance, the phase vector modification unit (45) is adapted to generate a new phase vector.

14. The communication apparatus (10) according to one of claims 1 through 13, further comprising: a transmission connecting unit that is connectable to a plurality of transmission lines.

15. The communication apparatus (10) according to one of claims 1 through 14, wherein the communication apparatus (10) is adapted to use a power line (1A) as its transmission line for data transmission.

16. A communication method by which a multicarrier communication is performed in a first network (NW1), wherein the method comprises the steps of:
when a communication apparatus (10) belonging to a first network (NW1) communicates via a transmission line (1A) connecting to another communication apparatus belonging to a second network (NW2),
detecting a communication signal from a second network (NW2) with a phase vector identical to a first phase vector used by the communication method in the first network (NW1),
changing the phase vector corresponding to at least one of a plurality of subcarrier signals based on the detecting, so that the changed phase vector is different from said phase vector used by said another communication apparatus, wherein the plurality of subcarrier signals being included in a multicarrier signal; and
rotating phase of at least one of the plurality of subcarrier signals based on the changed phase vector.

17. The communication method according to claim 16, further comprising:
changing the phase vector, so that the phase vector is randomized for each of the subcarriers.

18. The communication method according to one of claims 16 and 17, further comprising:
changing a phase vector to be used for the communication apparatus (10) itself, so that a network to which the communication apparatus (10) belongs and another network have different phase vectors, when a plurality of one of logically and physically separated networks are present.

19. The communication method according to claim 18, further comprising:
changing the phase vectors of the communication apparatus (10) and all the remote units (10R) connected to the network to which the communication apparatus (10) belongs, when detecting a communication apparatus of the another network, which differs from the network to which the communication apparatus (10) belongs, and when the communication apparatus (10) is a base unit (10B) of the network including the base unit (10B) and remote units (10R).

20. An integrated circuit (11) for multicarrier communication in a first network (NW1), wherein the integrated circuit comprises:
means for detecting a communication signal from a second network (NW2) with a phase vector identical to a first phase vector used by the commnication integrated circuit in the first network (NW1).
a phase vector modification unit (45) adapted - when a communication apparatus (10) belonging to a first network (NW1) performs a multicarrier communication via a transmission line (1A) connecting to another communication apparatus belonging to a second network (NW2) - to automatically change a phase vector corresponding to at least one of a plurality of subcarrier signals based on the detection of the means, so that the changed phase vector is different from said phase vector used by said another communication apparatus, wherein the plurality of subcarrier signals being included in a multicarrier signal; and
a phase rotator (43) that rotates phase of at least one of the plurality of subcarrier signals based on the phase vector changed by the phase vector modification unit (45).

21. The communication apparatus (10) according to claim 1, the communication apparatus (10) comprising:
a vector generator (45) configured to generate a phase vector, the phase vector being a set of coefficients indicating a rotation degree corresponding to each of a plurality of subcarriers;
a signal receiving section (16) configured to receive a multicarrier signal having the plurality of subcarriers, the multicarrier signal including network information regarding a network at least one of the first network (NW1) and the second network (NW2);
a demodulator (44) configured to demodulate the multicarrier communication signal based on each of the plurality of subcarriers to generate a plurality of signal points, each of the plurality of signal points corresponding to each of the plurality of subcarriers; and
a phase rotator (43) configured to rotate each of the plurality of signal points on complex coordinate plane, based on each of the coefficients the set of which is the phase vector generated by the vector generator (45),
wherein the vector generator (45) being further configured to change the phase vector generated by the vector generator (45) into other phase vector, when each of the plurality of signal points rotated by the phase rotator (43) indicates the network information regarding the second network (NW2).

22. The communication apparatus (10) according to claim 1,
wherein the phase vector is used for equalizing time waveform levels of the multicarrier signal.

23. The communication method according to claim 16,
wherein the phase vector is used for equalizing time waveform levels of the multicarrier signal.

24. The integrated circuit (11) according to claim 20,
wherein the phase vector is used for equalizing time waveform levels of the multicarrier signal.

25. The communication apparatus (10) according to claim 21,
wherein the phase vector is used for equalizing time waveform levels of the multicarrier signal.

## Patentansprüche

1. Kommunikationsvorrichtung (10) zum Durchführen von Multitrager-Kommunikation in einem ersten Netz (NW1), wobei die Kommunikationsvorrichtung (10) umfasst:
Mittel zum Erfassen eines Kommunikationssignals von einem zweiten Netz (NW2) mit einem Phasenvektor, der identisch zu einem Phasenvektor ist, der von der Kommunikationsvorrichtung in dem ersten Netz (NW1) verwendet wird,
eine Phasenvektormodifikationseinheit (45), die ausgestaltet ist - wenn die Kommunikationsvorrichtung (10), die zu einem ersten Netz (NW1) gehört, ein Multiträger-Kommunikationsverfahren über eine Übermittlungsleitung (1A) durchführt, die mit einer anderen Kommunikationsvorrichtung verbindet, die zu einem zweiten Netz (NW2) gehört - automatisch einen Phasenvektor zu ändern, der zu wenigstens einem von mehreren Subträgersignalen gehört, auf Basis der Erfassung des Mittels, so dass der geänderte Phasenvektor von dem Phasenvektor abweichend ist, der von der anderen Kommunikationsvorrichtung verwendet wird, wobei die mehreren Subträgersignale in einem Multiträgersignal enthalten sind, und
einen Phasenrotator (43), der ausgestaltet ist, eine Phase von wenigstens einem der mehreren Subträgersignale auf Basis des Phasenvektors zu rotieren, der von der Phasenvektormodifikationseinheit (45) geändert wurde

2. Kommunikationsvorrichtung (10) nach Anspruch 1,
wobei die Phasenvektormodifikationseinheit (45) ausgestaltet ist, den Phasenvektor zu ändern, so dass der Phasenvektor für jeden der Subträger randomisiert wird.

3. Kommunikationsvorrichtung (10) nach einem der Ansprüche 1 oder 2,
wobei, wenn mehrere logisch oder physikalisch getrennte Netze vorhanden sind, die Phasenvektormodifikationseinheit (45) ausgestaltet ist, einen Phasenvektor, der von der Kommunikationsvorrichtung (10) selbst genutzt wird, zu ändern, so dass ein Netz, zu dem die Kommunikationsvorrichtung (10) gehört, und ein anderes Netz unterschiedliche Phasenvektoren aufweist.

4. Kommunikationsvorrichtung (10) nach Anspruch 3,
wobei, wenn die Kommunikationsvorrichtung (10) ein Netz aufbaut oder wenn die Kommunikationsvorrichtung (10) mit einem existierenden Netz verbunden ist, die Phasenvektormodifikationseinheit (45) ausgestaltet ist, den Phasenvektor gemäß einem Kode des einzustellenden Netzes zu ändern.

5. Kommunikationsvorrichtung (10) nach Anspruch 3,
wobei, wenn das andere Netz erfasst wird, das sich von dem Netz unterscheidet, zu dem die Kommunikationsvorrichtung (10) gehört, die Phasenvektormodifikationseinheit (45) ausgestaltet ist, den Phasenvektor zu ändern.

6. Kommunikationsvorrichtung (10) nach Anspruch 5, ferner mit:
einer Phasenvektoreinstelleinheit (11B4), die ausgestaltet ist, einen Phasenvektoränderungsvorgang durch die Phasenvektormodifikationseinheit (45) zu unterbrechen, wenn die Phasenvektormodifikationseinheit (45) das andere Netz während einer vorbestimmten Zeit nicht erfasst hat.

7. Kommunikationsvorrichtung (10) nach einem der Ansprüche 5 oder 6,
wobei, wenn das andere Netz erfasst wird, die Phasenvektormodifikationseinheit (45) ausgestaltet ist, ferner den Phasenvektor nur dann zu ändern, wenn ein Signalniveau eines Multiträgersignals, das für das erfasste andere Netz verwendet wird, höher als ein vorbestimmter Schwellenwert ist.

8. Kommunikationsvorrichtung (10) nach einem der Ansprüche 6 oder 7, ferner mit:
einer Phasenvektoreinstelleinheit (11B4), die ausgestaltet ist, den Phasenvektoränderungsvorgang durch die Phasenvektormodifikationseinheit (45) zu unterbrechen, wobei die Kommunikationsvorrichtung (10) eine entfernte Einheit (10R) eines Netzes mit einer Basiseinheit (10B) und der entfernten Einheit (10R) ist,
wobei die Phasenvektormodifikationseinheit (45) ausgestaltet ist, einen Phasenvektor und einen Kode des Netzes zu erfassen, die in einem Multiträgersignal angegeben werden, das von einer anderen Kommunikationsvorrichtung übermittelt wird, und wobei die Phasenvektoreinstelleinheit (11B4) ausgestaltet ist, den Phasenvektoränderungsvorgang durch die Phasenvektormodifikationseinheit (45) zu unterbrechen, wenn der Phasenvektor, der von der Phasenvektormodifikationseinheit (45) erfasst wurde, identisch zu dem Phasenvektor des Netzes ist, zu dem die Kommunikationsvorrichtung (10) gehört, und wenn der Kode des Netzes, der von der Phasenvektormodifikationseinheit (45) erfasst wurde, identisch zu dem Kode des Netzes ist, zu dem die Kommunikationsvorrichtung (10) gehört.

9. Kommunikationsvorrichtung (10) nach Anspruch 3,
wobei, wenn eine Kommunikationsvorrichtung des anderen Netzes erfasst wird, das ein anderes als das Netz ist, zu dem die Kommunikationsvorrichtung (10) gehört, und wenn die Kommunikationsvorrichtung (10) eine Basiseinheit (10B) des Netzes mit der Basiseinheit (10B) und entfernten Einheiten (10R) ist, die Phasenvektormodifikationseinheit (45) ausgestaltet ist, die Phasenvektoren der Kommunikationsvorrichtung (10) und aller entfernten Einheiten (10R) zu ändern, die mit dem Netz verbunden sind, zu dem die Kommunikationsvorrichtung (10) gehört.

10. Kommunikationsvorrichtung (10) nach Anspruch 3,
wobei, wenn die Kommunikationsvorrichtung des anderen Netzes erfasst wird, das von dem Netz abweicht, zu der die Kommunikationsvorrichtung (10) gehört, und wenn die Kommunikationsvorrichtung (10) eine entfernte Einheit (10R) des Netzes mit der Basiseinheit (10B) und entfernten Einheiten (10R) ist, die Phasenvektormodifikationseinheit (45) ausgestaltet ist, die Basiseinheit (10B) des Netzes, zu dem die Kommunikationsvorrichtung (10) gehört, über die Präsenz des anderen Netzes zu benachrichtigen.

11. Kommunikationsvorrichtung (10) nach einem der Ansprüche 1 bis 10,
wobei die Phasenvektormodifikationseinheit (45) einen Zufallswertgenerator aufweist, der ausgestaltet ist, einen Zufallswert zu erzeugen, mit dem ein Phasenvektor erzeugt wird.

12. Kommunikationsvorrichtung (10) nach einem der Ansprüche 1 bis 10,
wobei die Phasenvektormodifikationseinheit (45) einen zyklischen Versatzdesignator aufweist, der ausgestaltet ist, einen zyklischen Versatz an einem Phasenvektor durchzuführen.

13. Kommunikationsvorrichtung (10) nach einem der Ansprüche 1 bis 12,
wobei, wenn festgestellt wird, dass die Änderung des Phasenvektors eine Kommunikationsleistung verringert, die Phasenvektormodifikationseinheit (45) ausgestaltet ist, einen neuen Phasenvektor zu erzeugen.

14. Kommunikationsvorrichtung (10) nach einem der Ansprüche 1 bis 13, ferner mit einer Übermittlungsverbindungseinheit, die mit mehreren Übermittlungsleitungen verbindbar ist.

15. Kommunikationsvorrichtung (10) nach einem der Ansprüche 1 bis 14,
wobei die Kommunikationsvorrichtung (10) ausgestaltet ist, eine Stromleitung (1A) als die Übermittlungsleitung für Datenübermittlung zu verwenden.

16. Kommunikationsverfahren, mit dem eine Multiträgerkommunikation in einem ersten Netz (NW1) durchgeführt wird, wobei das Verfahren die Schritte aufweist:
Erfassen eines Kommunikationssignals von einem zweiten Netz (NW2) mit einem Phasenvektor, der identisch zu einem ersten Phasenvektor ist, der von einer Kommunikationsvorrichtung in dem einem Netz (NW1) verwendet wird, wenn die Kommunikationsvorrichtung (10), die zu dem ersten Netz (NW1) gehört, über eine Übermittlungsleitung (1A) kommuniziert, die mit der anderen Kommunikationsvorrichtung verbindet, die zu dem zweiten Netz (NW2) gehört,
Ändern des Phasenvektors entsprechend wenigstens einem von mehreren Subträgersignalen auf Basis der Erfassung, so dass der geänderte Phasenvektor sich von dem Phasenvektor unterscheidet, der von der anderen Kommunikationsvorrichtung verwendet wird, wobei die mehreren Subträgersignale in einem Multiträgersignal enthalten sind, und
Rotieren einer Phase von wenigstens einem von mehreren Subträgersignalen auf Basis des geänderten Phasenvektors.

17. Kommunikationsverfahren nach Anspruch 16, ferner mit:
Ändern des Phasenvektors, so dass der Phasenvektor für jeden der Subträger randomisiert wird.

18. Kommunikationsverfahren nach Anspruch 16 oder 17, ferner mit:
Ändern eines Phasenvektors, der von der Kommunikationsvorrichtung (10) selbst zu nutzen ist, so dass ein Netz, zu dem die Kommunikationsvorrichtung (10) gehört, und ein anderes Netz unterschiedliche Phasenvektoren aufweisen, wenn mehrere logisch oder physikalisch getrennte Netze vorhanden sind.

19. Kommunikationsverfahren nach Anspruch 18, ferner mit:
Ändern des Phasenvektors der Kommunikationsvorrichtung (10) und aller entfernten Einheiten (10R), die mit dem Netz verbunden sind, zu dem die Kommunikationsvorrichtung (10) gehört, wenn eine Kommunikationsvorrichtung des anderen Netzes erfasst wird, das ein anderes als das Netz ist, zu dem die Kommunikationsvorrichtung (10) gehört, und wenn die Kommunikationsvorrichtung (10) eine Basiseinheit (10B) des Netzes mit der Basiseinheit (10B) und entfernten Einheiten (10R) ist.

20. Integrierte Schaltung (11) für Multiträgerkommunikation in einem ersten Netz (NW1), wobei die integrierte Schaltung umfasst:
Mittel zum Erfassen eines Kommunikationssignals von einem zweiten Netz (NW2) mit einem Phasenvektor, der identisch zu einem Phasenvektor ist, der von der Kommunikationsvorrichtung in dem ersten Netz (NW1) verwendet wird,
eine Phasenvektormodifikationseinheit (45), die ausgestaltet ist - wenn die Kommunikationsvorrichtung (10), die zu einem ersten Netz (NW1) gehört, ein Multiträger-Kommunikationsverfahren über eine Übermittlungsleitung (1A) durchführt, die mit einer anderen Kommunikationsvorrichtung verbindet, die zu einem zweiten Netz (NW2) gehört - automatisch einen Phasenvektor zu ändern, der zu wenigstens einem von mehreren Subträgersignalen gehört, auf Basis der Erfassung des Mittels, so dass der geänderte Phasenvektor von dem Phasenvektor abweichend ist, der von der anderen Kommunikationsvorrichtung verwendet wird, wobei die mehreren Subträgersignale in einem Multiträgersignal enthalten sind,
und einen Phasenrotator (43), der ausgestaltet ist, eine Phase von wenigstens einem der mehreren Subträgersignale auf Basis des Phasenvektors zu rotieren, der von der Phasenvektormodifikationseinheit (45) geändert wurde.

21. Kommunikationsvorrichtung (10) nach Anspruch 1,
wobei die Kommunikationsvorrichtung (10) umfasst:
einen Vektorgenerator (45), der konfiguriert ist, einen Phasenvektor zu erzeugen, wobei der Phasenvektor ein Satz von Koeffizienten ist, die ein Rotationsmaß angeben, das zu einem jeden von mehreren Subträgern gehört,
einen Signalempfangsabschnitt (16), der konfiguriert ist, ein Multiträgersignal mit den mehreren Subträgern zu empfangen, wobei das Multiträgersignal Netzinformation hinsichtlich eines Netzes von dem ersten Netz (NW1) und/oder dem zweiten Netz (NW2) enthält,
einen Demodulator (44), der konfiguriert ist, das Multiträgerkommunikationssignal auf Basis eines jeden der mehreren Subträger zu demodulieren, um mehrere Signalpunkte zu erzeugen, wobei jeder der mehreren Signalpunkte einem der mehreren Subträger entspricht, und
einen Phasenrotator (43), der konfiguriert ist, jeden der mehreren Signalpunkte in einer komplexen Koordinatenebene zu rotieren, auf Basis jeder Koeffizienten, deren Satz der Phasenvektor ist, der von dem Vektorgenerator (45) erzeugt wird,
wobei der Vektorgenerator (45) ferner konfiguriert ist, den Phasenvektor, der von dem Vektorgenerator (45) erzeugt wird, in einen anderen Phasenvektor zu ändern, wenn jeder der mehreren Signalpunkte, die von dem Phasenrotator (43) rotiert werden, die Netzinformation hinsichtlich des zweiten Netzes (NW2) angibt.

22. Kommunikationsvorrichtung (10) nach Anspruch 1,
wobei der Phasenvektor zum Ausgleichen von Zeitwellenformniveaus des Multiträgersignals verwendet wird.

23. Kommunikationsverfahren nach Anspruch 16,
wobei der Phasenvektor zum Ausgleichen von Zeitwellenformniveaus des Multiträgersignals verwendet wird.

24. Integrierte Schaltung (11) nach Anspruch 20,
wobei der Phasenvektor zum Ausgleichen von Zeitwellenformniveaus des Multiträgersignals verwendet wird.

25. Kommunikationsvorrichtung (10) nach Anspruch 21,
wobei der Phasenvektor zum Ausgleichen von Zeitwellenformniveaus des Multiträgersignals verwendet wird.

## Revendications

1. Appareil de communication (10) destiné à établir une communication multi-porteuses dans un premier réseau (NW1), dans lequel l'appareil de communication (10) comprend:
un moyen destiné à détecter un signal de communication provenant d'un second réseau (NW2) avec un vecteur de phase identique à un premier vecteur de phase utilisé par l'appareil de communication dans le premier réseau (NW1),
une unité de modification de vecteur de phase (45) adaptée pour changer automatiquement, lorsque ledit appareil de communication (10) appartenant à un premier réseau (NW1) exécute un procédé de communication multi-porteuses à travers une ligne de transmission (1A) le reliant à un autre appareil de communication appartenant à un second réseau (NM2), un vecteur de phase correspondant à au moins l'un d'une pluralité de signaux de sous-porteuses sur la base de la détection du moyen, de sorte que le vecteur de phase changé soit différent dudit vecteur de phase utilisé par ledit un autre appareil de communication, dans lequel la pluralité de signaux de sous-porteuses étant compris dans un signal multi-porteuses; et
un rotateur de phase (43) adapté pour tourner une phase d'au moins l'un de la pluralité de signaux de sous-porteuses sur la base du vecteur de phase changé par l'unité de modification de vecteur de phase (45).

2. Appareil de communication (10) selon la revendication 1,
dans lequel l'unité de modification de vecteur de phase (45) est adaptée pour changer le vecteur de phase, de sorte à rendre le vecteur de phase aléatoire pour chacune des sous-porteuses.

3. Appareil de communication (10) selon l'une des revendications 1 et 2,
dans lequel, lorsqu'une pluralité d'un réseau de réseaux séparés de manière logique et physique sont présents, l'unité de modification de vecteur de phase (45) est adaptée pour changer un vecteur de phase devant être utilisé pour l'appareil de communication (10) lui-même, de sorte qu'un réseau auquel l'appareil de communication (10) appartient et un autre réseau aient des vecteurs de phase différents.

4. Appareil de communication (10) selon la revendication 1,
dans lequel, lorsque l'appareil de communication (10) construit un réseau ou lorsque l'appareil de communication (10) est connecté à un réseau existant, l'unité de modification de vecteur de phase (45) est adaptée pour changer le vecteur de phase selon un code du réseau à établir.

5. Appareil de communication (10) selon la revendication 3,
dans lequel, en détectant l'autre réseau, qui est différent du réseau auquel appartient l'appareil de communication (10), l'unité de modification de vecteur de phase (45) est adaptée pour changer le vecteur de phase.

6. Appareil de communication (10) selon la revendication 5, comprenant en outre:
une unité de réglage de vecteur de phase (11B4) qui est adaptée pour arrêter un processus de changement de vecteur de phase par l'unité de modification de vecteur de phase (45), lorsque l'unité de modification de vecteur de phase (45) n'a pas détecté l'autre réseau pendant un délai prédéterminé.

7. Appareil de communication (10) selon l'une des revendications 5 et 6,
dans lequel, en détectant l'autre réseau, l'unité de modification de vecteur de phase (45) est adaptée pour changer en outre le vecteur de phase uniquement lorsqu'un niveau de signal d'un signal multi-porteuses utilisé pour l'autre réseau détecté est supérieur à un seuil prédéterminé.

8. Appareil de communication (10) selon l'une des revendications 6 et 7, comprenant en outre:
une unité de réglage de vecteur de phase (11B4) qui est adaptée pour arrêter le processus de changement de vecteur de phase par l'unité de modification de vecteur de phase (45), l'appareil de communication (10) étant une unité distante (10R) d'un réseau comportant une unité de base (10B) et l'unité distante (10R),
dans lequel l'unité de modification de vecteur de phase (45) est adaptée pour détecter un vecteur de phase et un code du réseau indiqué dans un signal multi-porteuses transmis d'un autre appareil de communication, et dans lequel l'unité de réglage de vecteur de phase (11B4) est adaptée pour arrêter le processus de changement de vecteur de phase par l'unité de modification de vecteur de phase (45), lorsque le vecteur de phase détecté par l'unité de modification de vecteur de phase (45) est identique au vecteur de phase du réseau auquel appartient l'appareil de communication (10), et lorsque le code du réseau détecté par l'unité de modification de vecteur de phase (45) est identique au code du réseau auquel appartient l'appareil de communication (10).

9. Appareil de communication (10) selon la revendication 3,
dans lequel, en détectant un appareil de communication de l'autre réseau, qui est différent du réseau auquel appartient l'appareil de communication (10), et lorsque l'appareil de communication (10) est une unité de base (10B) du réseau comportant l'unité de base (10B) et des unités distantes (10R), l'unité de modification de vecteur de phase (45) est adaptée pour changer les vecteurs de phase de l'appareil de communication (10) et toutes les unités distantes (10R) connectées au réseau auquel appartient l'appareil de communication (10),

10. Appareil de communication (10) selon la revendication 3,
dans lequel, en détectant l'appareil de communication de l'autre réseau, qui est différent du réseau auquel appartient l'appareil de communication (10), et lorsque l'appareil de communication (10) est une unité distante (10R) du réseau comportant l'unité de base (10B) et des unités distantes (10R), l'unité de modification de vecteur de phase (45) est adaptée pour aviser l'unité de base (10B) du réseau auquel appartient l'appareil de communication (10) de la présence de l'autre réseau.

11. Appareil de communication (10) selon l'une des revendications 1 à 10, dans lequel l'unité de modification de vecteur de phase (45) comporte un générateur de valeurs aléatoires qui est adapté pour générer une valeur aléatoire par laquelle un vecteur de phase est généré.

12. Appareil de communication (10) selon l'une des revendications 1 à 10, dans lequel l'unité de modification de vecteur de phase (45) comporte un désignateur de décalage cyclique qui est adapté pour exécuter un décalage cyclique sur un vecteur de phase.

13. Appareil de communication (10) selon l'une des revendications 1 à 12, dans lequel, en déterminant que le changement du vecteur de phase détériore la performance de communication, l'unité de modification de vecteur de phase (45) est adaptée pour générer un nouveau vecteur de phase.

14. Appareil de communication (10) selon l'une des revendications 1 à 13, comprenant en outre: une unité de connexion de transmission qui peut être connectée à une pluralité de lignes de transmission.

15. Appareil de communication (10) selon l'une des revendications 1 à 14, dans lequel l'appareil de communication (10) est adapté pour utiliser une ligne électrique (1A) comme étant sa ligne de transmission pour la transmission de données.

16. Procédé de communication par lequel une communication multi-porteuses est établie dans un premier réseau (NW1), dans lequel le procédé comprend les étapes qui consistent à :
lorsqu'un appareil de communication (10) appartenant à un premier réseau (NW1) communique par l'intermédiaire d'une ligne de transmission (1A) le connectant à un autre appareil de communication appartenant à un second réseau (NW2),
détecter un signal de communication provenant d'un second réseau (NW2) avec un vecteur de phase identique à un premier vecteur de phase utilisé par le procédé de communication dans le premier réseau (NW1),
changer le vecteur de phase correspondant à au moins l'un d'une pluralité de signaux de sous-porteuses sur la base de la détection, de sorte que le vecteur de phase changé soit différent dudit vecteur de phase utilisé par ledit un autre appareil de communication, dans lequel la pluralité de signaux de sous-porteuses étant inclus dans un signal multi-porteuses; et
tourner la phase d'au moins l'un de la pluralité de signaux de sous-porteuses sur la base du vecteur de phase changé.

17. Procédé de communication selon la revendication 16, comprenant en outre le fait:
de changer le vecteur de phase, de sorte que le vecteur de phase devienne aléatoire pour chacune des sous-porteuses.

18. Procédé de communication selon l'une des revendications 16 et 17, comprenant en outre le fait:
de changer un vecteur de phase devant être utilisé pour l'appareil de communication (10) lui-même, de sorte qu'un réseau auquel l'appareil de communication (10) appartient et qu'un autre réseau aient des vecteurs de phase différents, lorsqu'une pluralité d'un réseau de réseaux séparés de manière logique et physique sont présents.

19. Procédé de communication selon la revendication 18, comprenant en outre le fait :
changer les vecteurs de phase de l'appareil de communication (10) et de toutes les unités distantes (10R) connectées au réseau auquel appartient l'appareil de communication (10), en détectant un appareil de communication de l'autre réseau, qui est différent du réseau auquel appartient l'appareil de communication (10), et lorsque l'appareil de communication (10) est une unité de base (10B) du réseau comportant l'unité de base (10B) et les unités distantes (10R).

20. Circuit intégré (11) pour une communication multiporteuse dans un premier réseau (NW1), dans lequel le circuit intégré comprend:
un moyen pour détecter un signal de communication provenant d'un second réseau (NW2) avec un vecteur de phase identique à un premier vecteur de phase utilisé par le circuit intégré de communication dans le premier réseau (NW1),
une unité de modification de vecteur de phase (45) adaptée pour changer automatiquement, lorsqu'un appareil de communication (10) appartenant à un premier réseau (NW1) établit une communication multi-porteuses à travers une ligne de transmission (1A) le reliant à un autre appareil de communication appartenant à un second réseau (NW2), un vecteur de phase correspondant à au moins l'un d'une pluralité de signaux de sous-porteuses sur la base de la détection du moyen, de sorte que le vecteur de phase changé soit différent dudit vecteur de phase utilisé par ledit un autre appareil de communication, dans lequel la pluralité de signaux de sous-porteuses étant compris dans un signal multi-porteuses; et
un rotateur de phase (43) adapté pour tourner une phase d'au moins l'un de la pluralité de signaux de sous-porteuses sur la base du vecteur de phase modifié par l'unité de modification de vecteur de phase (45).

21. Appareil de communication (10) selon la revendication 1, l'appareil de communication (10) comprenant :
un générateur de vecteurs (45) configuré pour générer un vecteur de phase, le vecteur de phase étant un ensemble de coefficients indiquant un degré de rotation correspondant à chacune de la pluralité de sous-porteuses;
une section de réception de signaux (16) configurée pour recevoir un signal multi-porteuses ayant la pluralité de sous-porteuses, le signal multi-porteuses incluant des informations de réseau concernant un réseau au moins l'un du premier réseau (NW1) et du second réseau (NW2);
un démodulateur (44) configuré pour démoduler le signal de communication multi-porteuses sur la base de chacune de la pluralité de sous-porteuses afin de générer une pluralité de points de signaux, chacun de la pluralité de points de signaux correspondant à chacune de la pluralité de sous-porteuses; et
un rotateur de phase (43) configuré pour tourner chacun de la pluralité de points de signaux sur un plan de coordonnées complexes, sur la base de chacun des coefficients dont l'ensemble est le vecteur de phase généré par le générateur de vecteurs (45),
dans lequel le générateur de vecteurs (45) est en outre configuré pour changer le vecteur de phase généré par le générateur de vecteurs (45) en un autre vecteur de phase, lorsque chacun de la pluralité de points de signaux tourné par le rotateur de phase (43) indique les informations de réseau concernant le second réseau (NW2).

22. Appareil de communication (10) selon la revendication 1,
dans lequel le vecteur de phase est utilisé pour égaliser des niveaux de formes d'ondes temporelles du signal multi-porteuses.

23. Appareil de communication (10) selon la revendication 16,
dans lequel le vecteur de phase est utilisé pour égaliser des niveaux de formes d'ondes temporelles du signal multi-porteuses.

24. Circuit intégré (11) selon la revendication 20, dans lequel le vecteur de phase est utilisé pour égaliser des niveaux de formes d'ondes temporelles d'un signal multi-porteuses.

25. Appareil de communication (10) selon la revendication 21,
dans lequel le vecteur de phase est utilisé pour égaliser des niveaux de formes d'ondes temporelles du signal multi-porteuses.
